# EUROPEAN PATENT APPLICATION

(11) **EP 4 703 538 A1**
(43) Date of publication of application: **04.03.2026**
(21) Application number: 24796280.6
(22) Date of filing: 26.04.2024
(51) Int. Cl.: E04H 4/16

(54) **CLEANING APPARATUS**

(30) Priority: 27.04.2023 WO PCT/CN2023/091116; 05.02.2024 WO PCT/CN2024/076033
(71) Applicant: Xingmai Innovation Technology (Suzhou) Co., Ltd., Suzhou, Jiangsu 215124 (CN)
(72) Inventor: ZHANG, Shilei, Suzhou, Jiangsu 215124 (CN)
(74) Representative: Huang, Liwei
(86) International application number: PCT/CN2024/090188
(87) International publication number: WO 2024/222910

(57) **Abstract**

The present disclosure provides a cleaning device, including a cleaning device body, a cleaning cavity, a liquid inlet portion, a filtering mechanism, and a mode switching member. The cleaning cavity is configured to accommodate a first cleaning part. The liquid inlet portion is laterally provided in the cleaning cavity in a length direction of the liquid inlet portion and provided in the cleaning cavity in a width direction of the liquid inlet portion. The filtering mechanism is at least partially provided in a front portion of the cleaning device body. The mode switching member is provided at the front portion of the cleaning device body and at least partially located above the filtering mechanism. A first motion state includes a state of performing underwater cleaning. When the cleaning device performs underwater cleaning, the liquid inlet portion is close to a to-be-cleaned surface. A third motion state includes a state of performing water surface cleaning. When the cleaning device performs water surface cleaning, the liquid inlet portion is at least partially located above a water surface. The cleaning device can perform at least two operating conditions: underwater cleaning and water surface cleaning. In addition, the liquid inlet portion is shared in performing the at least two operating conditions to filter out garbage. This reduces production costs and use costs.

## Description

### CROSS REFERENCE TO RELATED APPLICATIONS

This application claims priority to International Patent Application No. PCT/CN2023/091116, filed with the World Intellectual Property Organization on April 27, 2023 and entitled "MOVING APPARATUS USED IN LIQUID AND SWIMMING POOL CLEANING ROBOT", which is incorporated herein by reference in its entirety.

This application claims priority to International Patent Application No. PCT/CN2024/076033, filed with the World Intellectual Property Organization on February 5, 2024 and entitled "MOVING APPARATUS USED IN LIQUID AND CLEANING DEVICE", which is incorporated herein by reference in its entirety.

### TECHNICAL FIELD

The present disclosure relates to the technical field of operating devices for liquid, and in particular to, a cleaning device.

### BACKGROUND

Swimming pool cleaning and maintenance are essential to keep water clean and the swimming pool hygienic. Swimming pool cleaning robots in the market can be classified into three categories. For the first category, the cleaning robot can clean the bottom of the swimming pool only. For the second category, the cleaning robot can clean both the bottom and vertical wall surfaces of the swimming pool, but the cleaning robot should operate under a water surface. For the third category, the cleaning robot constantly floats on the water surface and cleans only the water surface. The three categories of swimming pool cleaning robots have their own characteristics, but these swimming pool cleaning robots cannot effectively adjust positions in a liquid environment and their depth in the liquid environment based on actual needs. As a result, the bottom of the swimming pool, the wall surfaces of the swimming pool, and the water surface cannot be comprehensively cleaned. Consequently, application ranges and operating efficiencies of these cleaning robots are limited.

Therefore, there is a need for a cleaning device which can be flexibly switched between a position on a water surface and a position under the water surface, to improve the operating efficiency in cleaning water and the application range and reduce cleaning costs.

### SUMMARY

The present disclosure provides a cleaning device operating in liquid, including a cleaning device body; a cleaning cavity provided at a front portion of the cleaning device body and configured to accommodate at least one first cleaning part; a liquid inlet portion, where the liquid inlet portion is at least partially laterally provided in the cleaning cavity in a length direction of the liquid inlet portion and at least partially provided in the cleaning cavity in a width direction of the liquid inlet portion, and the liquid inlet portion is configured to allow external fluid to enter the cleaning device body; a filtering mechanism at least partially provided in the front portion of the cleaning device body, where the filtering mechanism includes a filtering box and a filtering box inlet, and the liquid inlet portion is adjacent to and communicates with the filtering box inlet; and a mode switching member provided at the front portion of the cleaning device body and at least partially located above the filtering mechanism, where the mode switching member is configured to adjust a pose of the cleaning device, enabling the cleaning device to be switched between a first motion state and a third motion state. The first motion state includes a state of performing underwater cleaning, where when the cleaning device performs underwater cleaning, the liquid inlet portion is close to a to-be-cleaned surface. The third motion state includes a state of performing water surface cleaning, where when the cleaning device performs water surface cleaning, the liquid inlet portion is at least partially located above the water surface. The third motion state includes a state in which a buoyancy cavity at the front portion of the cleaning device is at least partially located above the water surface, and the liquid inlet portion is at least partially located above the water surface.

The mode switching member includes a buoyancy adjustment assembly. The buoyancy adjustment assembly includes a buoyancy cavity and a buoyancy adjustment part. The buoyancy cavity is configured to accommodate liquid and/or gas. The buoyancy cavity is at least partially provided above the filtering mechanism. The buoyancy adjustment part communicates with the buoyancy cavity and is configured to adjust a volume of the liquid or the gas in the buoyancy cavity. The buoyancy cavity is provided with a buoyancy cavity air inlet and a buoyancy cavity liquid inlet. When the cleaning device is in at least one of the first motion state or the third motion state, the buoyancy cavity air inlet is located at a substantially highest position on the buoyancy cavity, and the buoyancy cavity liquid inlet is located at a substantially lowest position on the buoyancy cavity.

The filtering mechanism includes a filtering box cover detachably or pivotally connected to the cleaning device body. At least a part of the buoyancy cavity is located between the filtering box cover and the filtering box.

The cleaning device further includes a moving assembly. The moving assembly includes two first moving wheels provided at front portions of two sides of the cleaning device body. An outer side surface of the first moving wheel is provided with a drive paddle. When the cleaning device is in the third motion state, the drive paddle is at least partially located under the water surface and rotates with the first moving wheel to generate a driving force for the cleaning device to move in the third motion state. The drive paddle at least partially protrudes from an outer contour of the cleaning device body in a lateral direction of the cleaning device.

The cleaning device includes a propulsion assembly. The propulsion assembly includes at least two second propellers provided on the two sides of the cleaning device. When the cleaning device performs water surface cleaning, the second propeller is at least partially located under the water surface, and an extension direction of the second propeller is substantially parallel to the water surface.

The present disclosure further provides a liquid cleaning control method applied to the above cleaning device and performed by a control member. The method includes: obtaining a target task of cleaning a target region, where the target task includes water surface cleaning and/or underwater cleaning; determining an adjustment parameter of the cleaning device based on the target task and a current position of the cleaning device; and controlling, based on the adjustment parameter, the cleaning device to move and perform cleaning to complete the target task.

### BRIEF DESCRIPTION OF THE DRAWINGS

To describe technical solutions in embodiments of this application more clearly, the following briefly introduces the accompanying drawings for describing embodiments. It is clear that the accompanying drawings in the following descriptions show merely some embodiments of this application, and a person of ordinary skill in the art may derive other drawings from these accompanying drawings without creative efforts.
FIG. 1 is a schematic structural diagram of a cleaning device according to an embodiment of the present disclosure;
FIG. 2 is a schematic diagram of modules of a cleaning device according to an embodiment of the present disclosure;
FIG. 3 is a schematic cross-sectional diagram of a cleaning device according to an embodiment of the present disclosure;
FIG. 4 is a schematic structural diagram of a portion A shown in FIG. 3;
FIG. 5 is a schematic diagram showing that a cleaning device moves on a target bottom wall of a target region according to an embodiment of the present disclosure;
FIG. 6 is a schematic diagram showing that a cleaning device moves on a target side wall of a target region according to an embodiment of the present disclosure;
FIG. 7 is a schematic diagram showing that a cleaning device floats on a water surface according to an embodiment of the present disclosure;
FIG. 8 is a schematic diagram showing that a cleaning device simultaneously moves on a target bottom wall and a target side wall of a target region according to an embodiment of the present disclosure;
FIG. 9 is a schematic cross-sectional diagram of a cleaning device floating on a water surface according to an embodiment of the present disclosure;
FIG. 10 is a partial schematic diagram of a cleaning device according to an embodiment of the present disclosure;
FIG. 11 is a partial exploded diagram of a cleaning device according to an embodiment of the present disclosure;
FIG. 12 is a partial cross-sectional diagram of a cleaning device according to an embodiment of the present disclosure;
FIG. 13 is a schematic structural diagram of a second device housing of a cleaning device according to the present disclosure;
FIG. 14 is a schematic cross-sectional diagram of a second device housing of a cleaning device according to the present disclosure;
FIG. 15 is a first simplified structural diagram of a cleaning device floating on a water surface according to an embodiment of the present disclosure;
FIG. 16 is a second simplified structural diagram of a cleaning device moving in water according to an embodiment of the present disclosure;
FIG. 17 is a side diagram of a cleaning device according to an embodiment of the present disclosure; and
FIG. 18 is a schematic flow chart of a liquid cleaning control method according to an embodiment of the present disclosure.

Reference numerals: 10: cleaning device; 101: cleaning device body; 1011: liquid inlet portion; 1012: liquid outlet portion; 102: second device housing; 1023: filtering box cavity; 1024: liquid inlet channel; 10241: first port; 10242: second port; 103: first scraping blade; 109: first device housing; 1091: cleaning cavity; 110: moving assembly; 111: track; 1121: first moving wheel; 11211: drive paddle; 1122: second moving wheel; 130: propulsion assembly; 132: second propeller; 210: main water pump; 400: cleaning mechanism; 410: first cleaning part; 510: mode switching member; 511: buoyancy adjustment assembly; 5111: buoyancy cavity; 5112: buoyancy adjustment part; 5113: buoyancy cavity air inlet; 5114: buoyancy cavity liquid inlet; 700: filtering mechanism; 711: filtering box; 716: filtering box inlet; 720: filtering box cover; 30: water surface; 40: target region; 401: target bottom wall; 402: target side wall.

### DETAILED DESCRIPTION

The following clearly and completely describes the technical solutions in embodiments of the present disclosure with reference to the accompanying drawings in embodiments of the present disclosure. Clearly, the described embodiments are merely some but not all of embodiments of the present disclosure. All other embodiments obtained by a person of ordinary skill in the art based on embodiments of the present disclosure without creative efforts shall fall within the protection scope of the present disclosure.

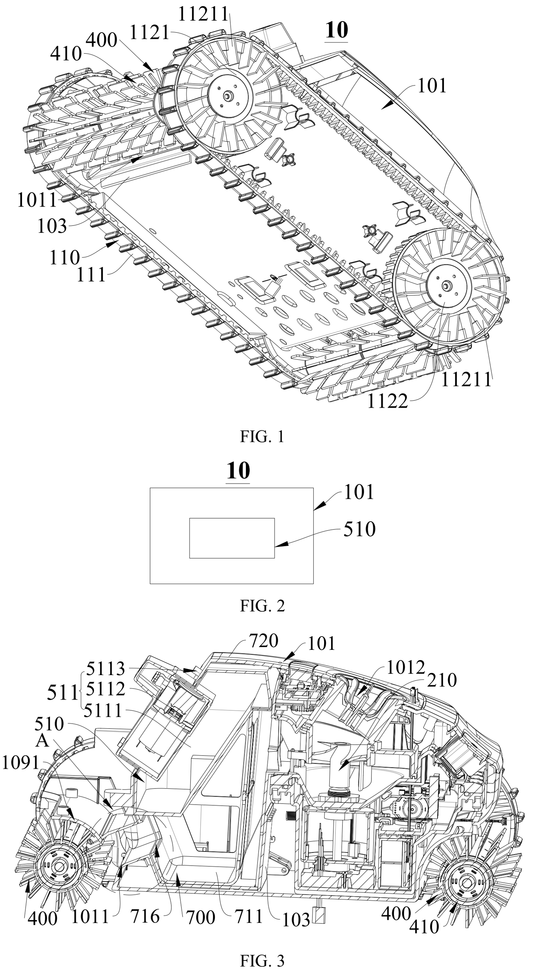

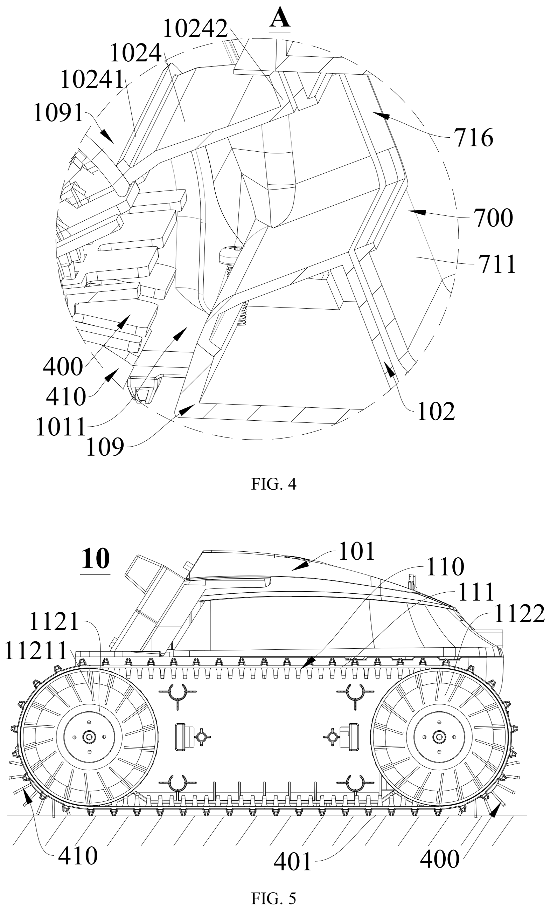

Refer to FIG. 1 to FIG. 4. FIG. 1 is a schematic structural diagram of a cleaning device according to an embodiment of the present disclosure. FIG. 2 is a schematic diagram of modules of a cleaning device according to an embodiment of the present disclosure. FIG. 3 is a schematic cross-sectional diagram of a cleaning device according to an embodiment of the present disclosure. FIG. 4 is a schematic structural diagram of a portion A shown in FIG. 3. The present disclosure provides a cleaning device. The cleaning device 10 may be, but is not limited to, a pool cleaning robot, a swimming pool cleaning robot, an underwater cleaning device, or the like. The cleaning device 10 operates in a target region 40. The target region 40 may be a region in which the cleaning device 10 moves and liquid is contained. The target region 40 may be, but is not limited to, a swimming pool, a pool, an oil well, a sewer, or the like. For example, the cleaning device 10 operates in water. The target region 40 may include a target bottom wall 401 and a target side wall 402. For example, the cleaning device 10 may move on the target bottom wall 401 and the target side wall 402 of the swimming pool and be switched between a position on a water surface 30 and a position under the water surface 30 of the swimming pool. In the present disclosure, a longitudinal direction of the cleaning device 10 may be defined as an extension direction of a connection line between a center of a front portion and a center of a rear portion of the cleaning device 10, and a lateral direction of the cleaning device 10 may be defined as an extension direction of a connection line between a center of a left side and a center of a right side of the cleaning device 10.

In one embodiment, the cleaning device 10 includes a cleaning device body 101, a cleaning cavity 1091, a liquid inlet portion 1011, and a filtering mechanism 700. The cleaning cavity 1091 is provided at the front portion of the cleaning device body 101. The cleaning cavity 1091 is configured to accommodate at least one first cleaning part 410. The first cleaning part 410 can clean garbage and guide the garbage into the liquid inlet portion 1011. The liquid inlet portion is at least partially laterally provided in the cleaning cavity 1091 in a length direction of the liquid inlet portion 1011. In a width direction of the liquid inlet portion 1011, the liquid inlet portion 1011 is at least partially located in the cleaning cavity 1091 or located on a bottom housing of the cleaning device 101. The liquid inlet portion 1011 is configured to allow external fluid to enter the cleaning device body 101. The filtering mechanism 700 is at least partially provided in the front portion of the cleaning device body 101 and is configured to filter out stains and floating objects in the target region 40. The filtering mechanism 700 includes a filtering box 711 and a filtering box inlet 716 provided on the filtering box 711. The liquid inlet portion 1011 is adjacent to and communicates with the filtering box inlet 716. Each of the first cleaning part 410, the liquid inlet portion 1011, and the filtering mechanism 700 is provided at a front position on the cleaning device 10. This can shorten a flow distance of water between the liquid inlet portion 1011 and the filtering mechanism 700 and improve filtration efficiency.

The cleaning device 10 includes a mode switching member 510. The mode switching member 510 adjusts an action force applied to the cleaning device 10 in a vertical direction, so that the cleaning device 10 can move in the vertical direction, and the cleaning device 10 can perform posture switching between the position on the water surface 30 and the position under the water surface 30. In this way, the cleaning device 10 can be switched between a first motion state and a third motion state. The mode switching member 510 may move in a vertical direction of the target region 40, so that the cleaning device 10 can be switched between the position on the water surface 30 and the position under the water surface 30. The vertical direction may be a vertical direction of the target region 40, for example, a vertical direction of the swimming pool, namely, a direction of gravity. A horizontal direction may be a horizontal direction of the target region 40, for example, a horizontal direction of the swimming pool, namely, a direction perpendicular to the direction of gravity. By disposing the mode switching member 510, the cleaning device 10 can be switched between the position on the water surface 30 and the position under the water surface 30, so that the position of the cleaning device can be adjusted based on various liquid environments and requirements, and the cleaning device can more flexibly perform corresponding operations at various positions in the water. Due to the mode switching member 510, the cleaning device 10 can be switched between the first motion state and the third motion state. In this way, the cleaning device 10 can perform at least two operating conditions: underwater cleaning and water surface cleaning, thereby meeting various use requirements.

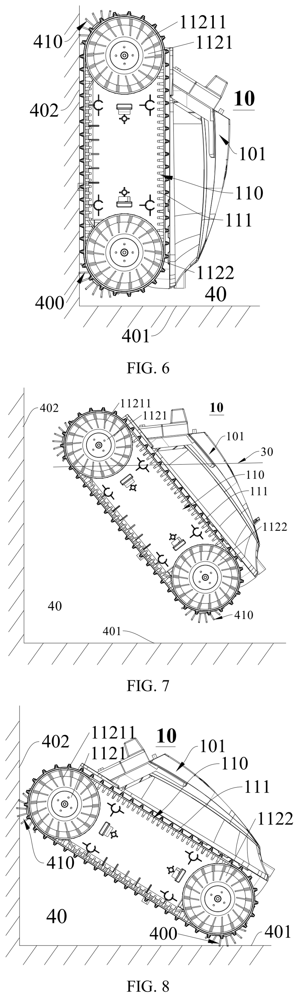

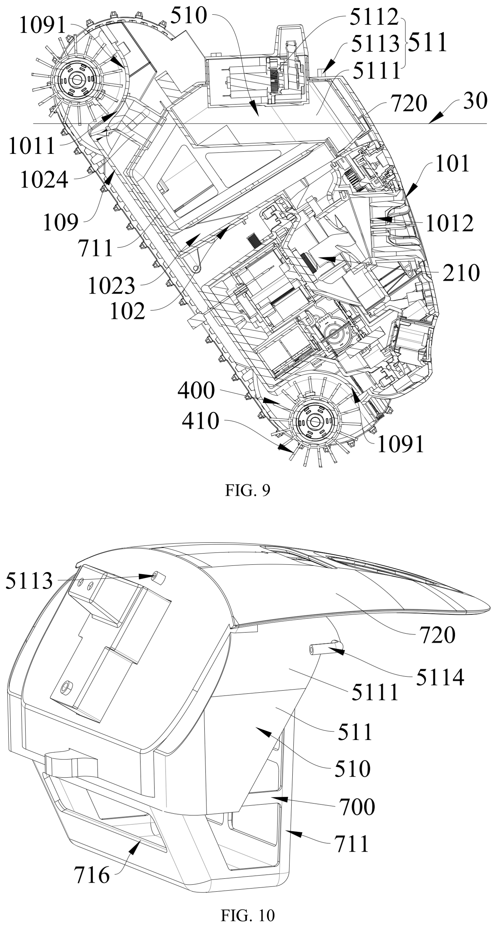

Refer to FIG. 5 to FIG. 9. FIG. 5 is a schematic diagram showing that a cleaning device moves on a target bottom wall of a target region according to an embodiment of the present disclosure. FIG. 6 is a schematic diagram showing that a cleaning device moves on a target side wall of a target region according to an embodiment of the present disclosure. FIG. 7 is a schematic diagram showing that a cleaning device floats on a water surface according to an embodiment of the present disclosure. FIG. 8 is a schematic diagram showing that a cleaning device simultaneously moves on a target bottom wall and a target side wall of a target region according to an embodiment of the present disclosure. FIG. 9 is a schematic cross-sectional diagram of a cleaning device floating on a water surface according to an embodiment of the present disclosure. The first motion state is defined as a state in which the cleaning device 10 moves on the target bottom wall 401, or an angle between the target bottom wall 401 and an overall direction of the cleaning device 10 is less than 90° and the cleaning device 10 is away from the water surface 30. That the cleaning device 10 is away from the water surface 30 may be understood as that the cleaning device 10 cleans the bottom of the pool or performs an action underwater, as shown in FIG. 5. A second motion state is defined as a state in which the cleaning device 10 moves on the target side wall 402, or the overall direction of the cleaning device 10 is substantially parallel to the target side wall 402, as shown in FIG. 6. The third motion state is defined as a state in which the cleaning device 10 moves on the water surface 30, or the cleaning device 10 is at least partially exposed at the water surface 30, or the cleaning device 10 is entirely located under the water surface 30 and close to the water surface 30. That the cleaning device 10 is close to the water surface 30 may be understood as that a distance between the cleaning device 10 and the water surface 30 is less than a threshold and the cleaning device 10 can perform water surface cleaning, as shown in FIG. 7 and FIG. 9. The overall direction of the cleaning device 10 is defined as a direction of a plane of a moving assembly 110 of the cleaning device 10, for example, a track 111 or a moving wheel, where the plane is in contact with a to-be-cleaned surface.

In one embodiment, the mode switching member 510 is provided at the front portion of the cleaning device body 101, and the mode switching member 510 is at least partially provided above the filtering mechanism 700. Because the filtering mechanism 700 is provided at a front position on the cleaning device body 101, the mode switching member 510 is also provided at a front position on the cleaning device body 101. When the cleaning device 10 is in the first motion state, the mode switching member 510 adjusts the cleaning device 10 to perform underwater cleaning. In this case, the liquid inlet portion 1011 is adjacent to the to-be-cleaned surface. The first cleaning part 410 cleans garbage on the to-be-cleaned surface and draws the garbage and the like into the liquid inlet portion 1011, and then the garbage enters the filtering box 711 through the filtering box inlet 716. In this way, the underwater garbage and the like are filtered out.

In a process of switching the cleaning device 10 from the first motion state to the third motion state, the mode switching member 510 adjusts an action force applied to the front portion of the cleaning device 10 in the vertical direction to be less than an action force applied to the rear portion of the cleaning device 10 in the vertical direction, so that the front portion of the cleaning device 10 is lifted, and the rear portion is lowered. In other words, the cleaning device 10 tilts in the water. In this case, the liquid inlet portion 1011 is at least partially exposed above the water surface 30. The first cleaning part 410 is at least partially located under the water surface 30. The first cleaning part 410 moves to draw garbage on the water surface and the like into the liquid inlet portion 1011, and then the garbage enters the filtering box 711 through the filtering box inlet 716. In this way, the garbage and the like on the water surface are filtered out.

Due to the mode switching member 510, the cleaning device 10 can be switched between the first motion state and the third motion state. In this way, the cleaning device 10 can perform at least two operating conditions: underwater cleaning and water surface cleaning. This improves water cleaning efficiency and an application range. In this way, various use requirements are met. In addition, the mode switching member 510 is provided above the filtering mechanism 700. The mode switching member 510 is adjusted to change a posture of the cleaning device 10, so that the cleaning device 10 can collect the underwater garbage and the garbage on the water surface by using only one liquid inlet portion 1011. This can reduce use costs and shorten time for the user to clean the liquid inlet portion 1011.

In some embodiments, the cleaning device 10 further operates in the second motion state. When the cleaning device 10 is in the second motion state, the cleaning device 10 can clean a pool wall or a waterline. Switching of the cleaning device 10 between the first motion state and the third motion state may include or exclude switching of the second motion state. In other words, the cleaning device 10 may have the first motion state and the third motion state, or the cleaning device 10 may have the first motion state, the second motion state, and the third motion state. The second motion state may be selected based on an actual requirement. This is not limited herein.

In some embodiments, the mode switching member 510 is configured to adjust an action force applied to the cleaning device 10 in the vertical direction, and the action force applied to the cleaning device 10 in the vertical direction may include a buoyancy force applied to the cleaning device 10 in the vertical direction. The mode switching member 510 may include a buoyancy adjustment assembly 511. The buoyancy adjustment assembly 511 may be configured to adjust a magnitude of the buoyancy force applied to the cleaning device 10 in the vertical direction. The buoyancy adjustment assembly 511 adjusts a magnitude of a buoyancy force applied to the front portion of the cleaning device body 101 in the vertical direction to be the same as a magnitude of a buoyancy force applied to the rear portion of the cleaning device 10 in the vertical direction. In this case, the cleaning device 10 is in the first motion state and can perform underwater cleaning. The buoyancy adjustment assembly 511 adjusts the magnitude of the buoyancy force applied to the front portion of the cleaning device 10 in the vertical direction to be different from the magnitude of the buoyancy force applied to the rear portion of the cleaning device 10 in the vertical direction. In this case, the cleaning device 10 is in the third motion state and can perform water surface cleaning.

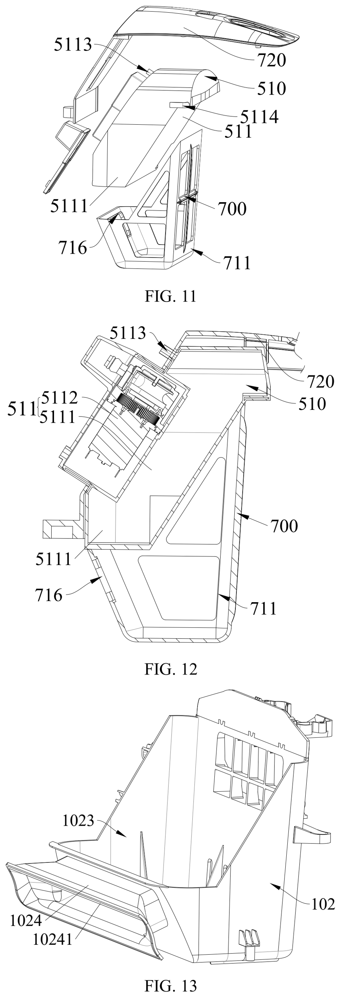

Refer to FIG. 10 to FIG. 12. FIG. 10 is a partial schematic diagram of a cleaning device according to an embodiment of the present disclosure. FIG. 11 is a partial exploded diagram of a cleaning device according to an embodiment of the present disclosure. FIG. 12 is a partial cross-sectional diagram of a cleaning device according to an embodiment of the present disclosure. In some embodiments, with reference to FIG. 1 to FIG. 9, the buoyancy adjustment assembly 511 may include a buoyancy cavity 5111 and a buoyancy adjustment part 5112. The buoyancy cavity 5111 is configured to accommodate liquid and/or gas. The buoyancy adjustment part 5112 may be configured to adjust a volume of the liquid and/or the gas in the buoyancy cavity 5111. The buoyancy cavity 5111 is at least partially provided above the filtering mechanism 700. The buoyancy adjustment part 5112 communicates with the buoyancy cavity 5111. The volume of the liquid and/or the gas in the buoyancy cavity 5111 is adjusted by the buoyancy adjustment part 5112 to change the magnitude of the buoyancy force applied to the front portion of the cleaning device 10 in the vertical direction, so that the cleaning device 10 can be switched between the first motion state and the third motion state.

There may be one, two, or more buoyancy cavities 5111. When there is one buoyancy cavity 5111, the buoyancy cavity 5111 is located above the filtering mechanism 700, and the buoyancy cavity 5111 and the filtering mechanism 700 are stacked vertically. When the cleaning device 10 is in the third motion state, a shape of the buoyancy cavity 5111 is configured in such a way that the liquid inlet portion 1011 is at least partially exposed above the water surface 30 under the buoyancy force applied to the front portion of the cleaning device 10. Therefore, a shape of the filtering box 711 is special under influence of the buoyancy cavity 5111. For example, a cross section of the filtering box 711 in a front-back direction of the cleaning device 10 increases in a direction from the top of the cleaning device 10 to the bottom of the cleaning device 10. The filtering box 711 is approximately in a right-angled trapezoidal shape, a triangular shape, or an arc shape.

When there are a plurality of buoyancy cavities 5111, the plurality of buoyancy cavities 5111 in this embodiment are provided substantially around an upper portion of the filtering box 711 in the front-back direction of the cleaning device body 101. In this case, the filtering box 711 is higher in the vertical direction, and an internal volume of the filtering box 711 is larger compared with a case in which only one buoyancy cavity 5111 is provided. When there are a plurality of buoyancy cavities 5111, adjacent buoyancy cavities 5111 may communicate with or not communicate with each other.

In one specific embodiment, the buoyancy adjustment assembly 511 includes at least two buoyancy cavities 5111. The two buoyancy cavities 5111 are located above the filtering mechanism 700. The at least two buoyancy cavities 5111 are provided substantially symmetrically in the longitudinal direction of the cleaning device 10, that is, provided substantially symmetrically at a left portion and a right portion of the cleaning device 10. Each buoyancy cavity 5111 is provided with a buoyancy cavity air inlet 5113 and a buoyancy cavity liquid inlet 5114. Volumes of gas or liquid in the at least two buoyancy cavities 5111 are synchronously adjusted by at least one buoyancy adjustment part 5112. The at least two buoyancy cavities 5111 cooperate with the at least one buoyancy adjustment part 5112, so that stability of the buoyancy force can be improved. This prevents the cleaning device 10 from overturning and deflecting due to an uneven buoyancy force applied to the cleaning device 10 under the water surface 30 or on the water surface 30. For example, when there are two buoyancy cavities 5111 and two buoyancy adjustment parts 5112, the two buoyancy cavities 5111 are respectively provided on two sides of the front portion or the rear portion of the cleaning device 10, and the buoyancy cavities 5111 are connected to corresponding buoyancy adjustment parts 5112 to synchronously adjust volumes of gas or liquid in the buoyancy cavities 5111.

In another specific embodiment, the buoyancy adjustment assembly 511 includes at least two buoyancy cavities 5111. The two buoyancy cavities 5111 are located above the filtering mechanism 700. The at least two buoyancy cavities 5111 are provided substantially symmetrically in the longitudinal direction of the cleaning device 10. Each buoyancy cavity 5111 is provided with a buoyancy cavity air inlet 5113 and a buoyancy cavity liquid inlet 5114. The buoyancy cavities 5111 are connected to corresponding buoyancy adjustment parts 5112 to independently adjust a volume of gas or liquid in each buoyancy cavity 5111. For example, volumes of gas or liquid in two buoyancy cavities 5111 are respectively controlled by two buoyancy adjustment parts 5112, so that operation postures of the cleaning device 10 can be expanded. The second motion state includes a state of cleaning a waterline. For example, when the cleaning device cleans the waterline, a buoyancy force of a buoyancy cavity 5111 on one side of the longitudinal direction of the cleaning device 10 is controlled to be greater than a buoyancy force of a buoyancy cavity 5111 on the other side, enabling the longitudinal direction of the cleaning device 10 to be substantially parallel to the waterline.

Specifically, one buoyancy cavity 5111 is filled with gas, and the other buoyancy cavity 5111 is filled with liquid. A buoyancy force at the gas-filled buoyancy cavity 5111 is larger, and therefore, the gas-filled buoyancy cavity floats on the water surface 30. A buoyancy force at the liquid-filled buoyancy cavity 5111 is small, and therefore, the liquid-filled buoyancy cavity 5111 submerges. In addition, water sprayed out from a main water pump 210 can provide a counter-thrust for the cleaning device 10 to be tightly attached to the target side wall 402. In this case, the posture of the cleaning device 10 is that one side of the cleaning device 10 is located on the water surface 30, and another side is located under the water surface 30, that is, a part of the liquid inlet portion 1011 and a part of the first cleaning part 410 are located on the water surface 30, another part of the liquid inlet portion 1011 and another part of the first cleaning part 410 are located under the water surface 30, and a roller brush shaft of the first cleaning part 410 may remain substantially perpendicular to the waterline. In this case, under the action of the moving assembly 110, the cleaning device 10 can laterally move (crab walk) on the target side wall 402 along the waterline to clean the waterline.

In another embodiment, there may be one or at least two buoyancy cavities 5111. The one or at least two buoyancy cavities 5111 are substantially symmetrically provided on the cleaning device body 101 in the longitudinal direction of the cleaning device 10. When the cleaning device 10 needs to adjust a posture in the second motion state to clean the waterline, the volume of the gas in the buoyancy cavity 5111 may be adjusted by a buoyancy cavity pump and through differential motion of moving assemblies 110 on the two sides of the cleaning device 10, so that the longitudinal direction of the cleaning device 10 is substantially parallel to the waterline or forms a preset angle with the waterline. In addition, cleaning paths of the first cleaning part 410 and the liquid inlet portion 1011 cover the waterline, so that the waterline is cleaned.

It should be noted that sizes and positions of the buoyancy cavities 5111 can be adjusted based on weights and positions of various components of the cleaning device 10 to ensure that the cleaning device 10 can be in a preset state when volumes of liquid and/or gas in the buoyancy cavities 5111 change.

The buoyancy cavity 5111 may be, but is not limited to, an inflatable buoyancy cavity, a liquid-containing buoyancy cavity, a partitioned buoyancy cavity, or the like. A volume of the buoyancy cavity 5111 may be preset. The buoyancy cavity 5111 may be made of a flexible material and/or a rigid material. The flexible material may include, but is not limited to, polyvinyl alcohol resin, polyethylene terephthalate, rubber, and the like. The rigid material may include, but is not limited to, glass, ceramic, phenolic plastic, polyurethane plastic, epoxy plastic, unsaturated polyester plastic, and the like. For example, the buoyancy cavity 5111 may be of a two-layer structure: an inner layer and an outer layer. The inner layer may be made of a flexible material and is configured to accommodate liquid and/or gas. The outer layer is a rigid protection housing and may be configured to provide protection and stability for the inner layer.

The buoyancy adjustment part 5112 may be further configured to adjust the volume of the gas in the buoyancy cavity 5111. When the buoyancy cavity 5111 made of a flexible material is in a deflated state, air may be input into the buoyancy cavity 5111 through the buoyancy cavity air inlet 5113 by using the buoyancy adjustment part 5112, to increase the volume of the gas in the buoyancy cavity 5111 and the magnitude of the buoyancy force applied to the cleaning device 10 in the vertical direction. It may be understood that the upward buoyancy force applied to the cleaning device 10 in the vertical direction is positively correlated with the volume of the gas in the buoyancy cavity 5111.

The buoyancy adjustment part 5112 may be further configured to adjust a volume of the liquid in the buoyancy cavity 5111. The cleaning device 10 may adjust the volume of the liquid in the buoyancy cavity 5111 by using the buoyancy adjustment part 5112, to adjust the volume of the gas in the buoyancy cavity 5111, thereby changing the magnitude of the buoyancy force applied to the cleaning device 10 in the liquid. For example, when the buoyancy cavity 5111 made of a rigid material contains liquid, the liquid may be discharged from the buoyancy cavity 5111 by using the buoyancy adjustment part 5112, to increase the magnitude of the buoyancy force applied to the cleaning device 10 in the vertical direction. It may be understood that the upward buoyancy force applied to the cleaning device 10 in the vertical direction is negatively correlated with the volume of the liquid in the buoyancy cavity 5111. The liquid in the buoyancy cavity 5111 may be discharged through the buoyancy cavity liquid inlet 5114.

The buoyancy adjustment part 5112 may be any structure that can adjust the gas and/or the liquid in the buoyancy cavity 5111. The buoyancy adjustment part 5112 may include a buoyancy cavity pump. The buoyancy cavity pump may drive the liquid in the buoyancy cavity 5111 to be discharged from the buoyancy cavity 5111. The buoyancy cavity pump may be, but is not limited to, a pneumatic pump, a hydraulic pump, an electric pump, a peristaltic pump, or the like. In an operating state, the buoyancy cavity pump can adjust the liquid and/or the gas in the buoyancy cavity 5111. In a non-operating state, the buoyancy cavity pump can prevent external liquid and/or external gas of the cleaning device 10 from entering the buoyancy cavity 5111, so that the buoyancy cavity 5111 is not affected by the external liquid and/or the external gas. The buoyancy adjustment part 5112 may alternatively be another structure. For example, the buoyancy adjustment part 5112 may be a piston assembly provided inside the buoyancy cavity 5111. The piston assembly moves inside the buoyancy cavity 5111 to adjust the volume of the gas and/or liquid in the buoyancy cavity 5111.

In some embodiments, as shown in FIG. 9, the third motion state includes a state in which the buoyancy cavity 5111 at the front portion of the cleaning device 10 is at least partially located above the water surface 30, and the liquid inlet portion 1011 is at least partially located above the water surface 30. When the cleaning device 10 is in the third motion state, a maximum cross section of the buoyancy cavity 5111 is flush with the water surface 30. Based on the above limitation, the buoyancy cavity 5111 can be completely filled with gas. In this case, the buoyancy force applied to the front portion of the cleaning device 10 in the vertical direction is maximized. This improves stability of the cleaning device 10 in the third motion state and therefore improves stability and reliability of the cleaning device 10 in performing water surface cleaning.

In some embodiments, the buoyancy cavity 5111 includes a buoyancy cavity air inlet 5113. The buoyancy cavity air inlet 5113 may be configured to allow gas to enter or be discharged. The cleaning device body 101 includes a device air inlet (not shown in the figure). The device air inlet may be configured to allow gas to enter or be discharged. The device air inlet is connected to the buoyancy cavity air inlet 5113 through a first connection duct (not shown in the figure). The device air inlet is located at the front portion of the cleaning device 10 to be exposed at the water surface as soon as possible when the cleaning device 10 is exposed at the water surface.

Generally, the cleaning device 10 may be first switched from the first motion state to the second motion state and then switched from the second motion state to the third motion state. The second motion state includes a state in which the cleaning device 10 moves to the waterline along the pool wall. In a process in which the cleaning device 10 moves upward to the waterline from the bottom of the pool, the buoyancy cavity air inlet 5113 or the device air inlet communicating with the buoyancy cavity air inlet 5113 may be first exposed above the water surface 30, so that the external gas can enter the buoyancy cavity 5111. During the above process, the buoyancy cavity air inlet 5113 is above the water surface 30 to ensure that the buoyancy cavity 5111 is filled with gas, or the volume of the gas in the buoyancy cavity 5111 reaches a preset volume, so that the cleaning device 10 can be switched to the third motion state or a water surface cleaning posture and remain in this state or posture.

In some embodiments, the buoyancy cavity 5111 includes a buoyancy cavity liquid inlet 5114. The buoyancy cavity liquid inlet 5114 may be configured to allow liquid to enter or be discharged. The cleaning device body 101 includes a device liquid inlet (not shown in the figure). The device liquid inlet may be configured to allow liquid to enter or be discharged. The device liquid inlet is connected to the buoyancy cavity liquid inlet 5114 through a second connection duct (not shown in the figure). When the cleaning device is at least in the third motion state, the device liquid inlet is located under the water surface 30. The device liquid inlet may be provided at the rear portion of the cleaning device body 101. The buoyancy cavity liquid inlet 5114 or the device liquid inlet needs to be provided to ensure that when the cleaning device 10 is at least in the third motion state or the water surface cleaning posture, the buoyancy cavity 5111 can be filled with liquid, or the volume of the liquid in the buoyancy cavity 5111 reaches a preset volume, so that the cleaning device 10 can be switched from a water surface operation posture to an underwater operation posture and remain in the underwater operation posture.

In some embodiments, when the cleaning device is in at least one of the first motion state or the third motion state, the buoyancy cavity air inlet 5113 is located at a substantially highest position on the buoyancy cavity 5111, so that the gas in the buoyancy cavity 5111 is completely discharged through the buoyancy cavity air inlet 5113. The highest position may be a highest position of the cleaning device 10 when the cleaning device 10 is in the first motion state, the second motion state, or the third motion state. In a process of switching the cleaning device 10 from the first motion state or the second motion state to the third motion state, the device air inlet or the buoyancy cavity air inlet 5113 is first exposed above the water surface 30, and when the buoyancy adjustment part 5112 is started, the gas enters the buoyancy cavity 5111 through the device air inlet or the buoyancy cavity air inlet 5113, and the liquid in the buoyancy cavity 5111 is subsequently discharged through the buoyancy cavity liquid inlet 5114. When the cleaning device 10 is switched from the third motion state or the second motion state to the first motion state, the gas in the buoyancy cavity 5111 can be smoothly discharged through the buoyancy cavity air inlet 5113, and the liquid enters the buoyancy cavity 5111 through the buoyancy cavity liquid inlet 5114. The device air inlet may be provided at the front portion of the body of the cleaning device 10.

When the cleaning device is in at least one of the first motion state or the third motion state, the buoyancy cavity liquid inlet 5114 is located at a substantially lowest position on the buoyancy cavity 5111, so that the liquid in the buoyancy cavity 5111 is completely discharged through the buoyancy cavity liquid inlet 5114. The lowest position may be a lowest position of the cleaning device when the cleaning device is in the first motion state, the second motion state, or the third motion state. In the process of switching the cleaning device 10 from the first motion state or the second motion state to the third motion state, the liquid in the buoyancy cavity 5111 is completely discharged through the buoyancy cavity liquid inlet 5114, and the gas enters the buoyancy cavity 5111 through the buoyancy cavity air inlet 5113. In a process of switching the cleaning device 10 from the third motion state to the first motion state or the second motion state, the liquid enters the buoyancy cavity 5111 through the buoyancy cavity liquid inlet 5114, and the gas in the buoyancy cavity 5111 is discharged through the buoyancy cavity air inlet 5113. The buoyancy cavity liquid inlet 5114 may communicate with the cleaning device body 101 through a duct. When the cleaning device is in the first motion state, the second motion state, or the third motion state, especially in the third motion state, an inlet of the duct is located under the water surface 30. When the cleaning device 10 is switched from the third motion state to the first motion state or the second motion state, the liquid can be smoothly pumped into the buoyancy cavity 5111, and the gas in the buoyancy cavity 5111 can be discharged through the buoyancy cavity air inlet 5113.

The buoyancy cavity air inlet 5113 may or may not communicate with gas (namely, may or may not be exposed at the water surface). When the buoyancy cavity air inlet 5113 does not communicate with the gas, a one-way valve may be provided at the buoyancy cavity air inlet 5113. The one-way valve can prevent water outside the cleaning device 10 from entering the buoyancy cavity 5111 through the buoyancy cavity air inlet 5113. The buoyancy cavity air inlet 5113 may alternatively communicate with the gas. For example, the buoyancy cavity air inlet 5113 may communicate with gas on the water surface 30, or the buoyancy cavity air inlet 5113 may communicate with a gas tank or a gas generation apparatus. The gas tank is filled with gas. The gas generation apparatus may automatically generate gas. The gas enters the buoyancy cavity 5111 through the buoyancy cavity air inlet 5113 to change pressure inside the buoyancy cavity 5111, so that the pressure of the buoyancy cavity 5111 is in a stable state. In this way, the liquid can be conveniently discharged from the buoyancy cavity 5111.

In some embodiments, when the cleaning device 10 cleans the bottom or the wall of the pool, the buoyancy cavity liquid inlet 5114, the buoyancy cavity air inlet 5113, the device liquid inlet, or the device air inlet of the cleaning device 10 can perform spray-sweeping on garbage on the bottom or the wall of the pool. In this case, the buoyancy cavity 5111 is filled with liquid, the buoyancy cavity pump may continue to operate, and at least one of the device liquid inlet, the device air inlet, the buoyancy cavity liquid inlet 5114, or the buoyancy cavity air inlet 5113 serves as a liquid discharge opening of the buoyancy cavity pump. The liquid is discharged through at least one of the device liquid inlet, the device air inlet, the buoyancy cavity liquid inlet, or the buoyancy cavity air inlet 5113. This helps agitate and guide garbage in a to-be-cleaned region to a cleaning path of the liquid inlet portion 1011.

In some embodiments, the buoyancy adjustment assembly 511 may further include a connection duct. The connection duct is configured to transmit gas or liquid. The connection duct may be connected to one or more of the buoyancy cavity 5111, the buoyancy adjustment part 5112, the buoyancy cavity air inlet 5113, and the liquid inlet portion 1011 of the buoyancy cavity 5111. The buoyancy adjustment assembly 511 may include two buoyancy cavities 5111, the buoyancy cavity pump, the buoyancy cavity air inlet 5113, and the connection duct. The buoyancy cavity 5111 may be connected to the buoyancy cavity pump through a connection duct. The buoyancy cavity pump may be connected to the buoyancy cavity air inlet 5113 through a connection duct. In the non-operating state, the buoyancy cavity pump has the same function as the one-way valve and can prevent the external liquid and/or the external gas from entering the buoyancy cavity 5111 through the buoyancy cavity air inlet 5113. In some other embodiments, when the buoyancy adjustment part 5112 is a centrifugal pump or the like, the one-way valve is provided at the connection duct to prevent the external liquid and/or the external gas from entering the buoyancy cavity 5111 through the buoyancy cavity air inlet 5113.

The connection ducts between the buoyancy cavity 5111, the buoyancy cavity pump, the buoyancy cavity air inlet 5113, and the buoyancy cavity liquid inlet 5114 are related to a disposition manner of the buoyancy cavity pump. For example, the buoyancy cavity pump may be connected to the buoyancy cavity 5111, and when the filtering box 711 needs to be removed, the buoyancy cavity 5111 may need to be conveniently detached from the cleaning device body 101. In this case, at least one first rigid connector on the buoyancy cavity 5111 may be connected to a second rigid connector on the cleaning device body 101. In a process of mounting the buoyancy cavity 5111, only the first rigid connector needs to be aligned with and inserted in the second rigid connector in a sealed manner. A corresponding connection duct may be flexible to avoid damage.

Another manner is that the buoyancy cavity pump is provided on the cleaning device body 101, and when the filtering box 711 is removed, the buoyancy cavity 5111 may be detached from the cleaning device body 101, and the connection duct between the buoyancy cavity 5111 and the buoyancy cavity pump, the device air inlet, or the device liquid inlet may be appropriately assembled and mounted by using a rotating mechanism, a duct groove for accommodation, and the like. Regardless of the disposition manner, a rotating part may be provided based on an actual situation and an actual requirement to assist the wires and the connection ducts between the buoyancy cavity pump, the buoyancy cavity 5111, each air inlet, and each liquid inlet in being mounted, so that stability and a service life of the wire and/or the connection duct can be ensured in a moving process. At least one wire or at least one connection duct may pass through the rotating part.

The gas in the buoyancy cavity 5111 comes from various sources. For a first source of the gas, the gas is obtained directly from the outside. For example, the cleaning device 10 moves along the target side wall 402 of the target region 40 to the water surface 30, and the buoyancy cavity air inlet 5113 is first exposed above the water surface, so that the external gas is driven by the buoyancy cavity pump to enter the buoyancy cavity air inlet. For example, the external gas enters the buoyancy cavity 5111 through the buoyancy cavity air inlet 5113 to change the volume of the gas in the buoyancy cavity 5111.

For a second source of the gas, the gas is obtained indirectly from the outside. In other words, the cleaning device 10 is provided with a protruding duct (not shown in the figure). The protruding duct communicates with the air inlet. An end of the protruding duct is away from the buoyancy cavity air inlet 5113, and the end extends out of the water surface 30, so that gas is directly discharged or sucked in to change the volume of the gas in the buoyancy cavity 5111. In this way, even if the cleaning device 10 does not climb the wall of the target region 40 to the water surface 30, the volume of the gas in the buoyancy cavity 5111 can be changed.

For a third source of the gas, a gas generation assembly (not shown in the figure) is provided in the cleaning device 10. The gas generation assembly can generate gas to change the volume of the gas in the buoyancy cavity 5111. In this way, even if the cleaning device 10 does not climb the wall of the target region 40 to the water surface 30, the volume of the gas in the buoyancy cavity 5111 can be changed. This improves convenience. The gas generation assembly may generate gas through a chemical reaction, electrolysis, water boiling, and the like to increase the volume of the gas in the buoyancy cavity 5111 or reduce the volume of the liquid in the buoyancy cavity 5111.

The gas in the buoyancy cavity 5111 is discharged through the buoyancy cavity air inlet 5113, or the gas may be compressed by a compression cylinder (not shown in the figure) to reduce the volume of the gas in the buoyancy cavity 5111, so that the cleaning device 10 can submerge. In an actual process, the buoyancy adjustment assembly 511 may not include the buoyancy cavity air inlet 5113. The volume of the gas may be changed inside the buoyancy adjustment assembly 511, such as increasing the volume of the gas in the buoyancy cavity 5111 by using the gas generation assembly or decreasing the volume of the gas in the buoyancy cavity 5111 by using the compression cylinder. In other embodiments, the volume of the gas may be increased or decreased in other manners. This is not limited herein.

In some embodiments, a filtering part (not shown in the figure) is provided at each of the buoyancy cavity air inlet 5113, the buoyancy cavity liquid inlet 5114, the device air inlet, and the device liquid inlet. The filtering part is configured to perform filtering to prevent garbage from clogging the buoyancy cavity air inlet 5113, buoyancy cavity liquid inlet 5114, the device air inlet, and the device liquid inlet. This improves use performance of the cleaning device 10. The filtering part may be a filtering mesh. The filtering mesh is detachably connected to each of the buoyancy cavity air inlet 5113, the buoyancy cavity liquid inlet 5114, the device air inlet, and the device liquid inlet, so that the filtering mesh is conveniently cleaned.

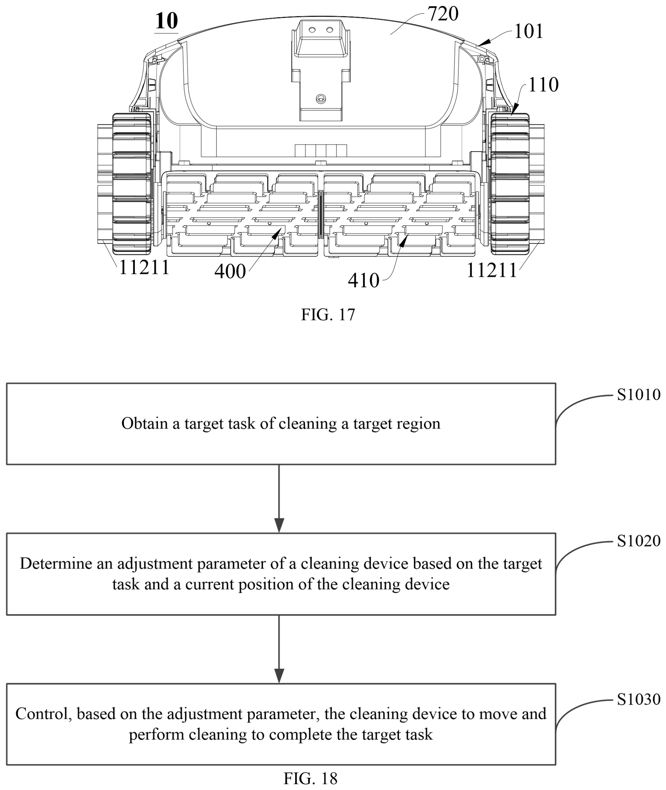

As shown in FIG. 1 and FIG. 3, when the cleaning device 10 needs to be switched from the position under the water surface 30 to the position on the water surface 30, the cleaning device 10 may move to a position close to the water surface 30 and determine when to control the buoyancy cavity pump to input gas into the buoyancy cavity 5111. For details about a moment at which the cleaning device 10 needs to be switched from the position under the water surface 30 to the position on the water surface 30, refer to FIG. 18 and related descriptions. As shown in FIG. 6, when the cleaning device 10 needs to be switched from the position under the water surface 30 to the position on the water surface 30, the cleaning device 10 may be tightly attached to and move on the target side wall 402 of the target region 40 to the position close to the water surface 30 and determine when to control the buoyancy adjustment part 5112 to increase the volume of the gas in the buoyancy cavity 5111. For details about content that the cleaning device 10 is tightly attached to and moves on the target side wall 402 of the target region 40, refer to the following description.

In some embodiments, when the cleaning device 10 needs to be switched from the position under the water surface 30 to the position on the water surface 30, the cleaning device 10 may be driven by a first driving force generated by a power adjustment assembly, to move to the position close to the water surface 30, and determine when to control the buoyancy adjustment part 5112 to increase the volume of the gas in the buoyancy cavity 5111. For more content about the power adjustment assembly, refer to the following description.

In some embodiments, the cleaning device 10 may include a first sensor (not shown in the figure). The first sensor may be configured to determine a position of the cleaning device 10 in real time. The position may be a vertical position (or referred to as a depth) of the cleaning device 10 in the liquid. For example, the first sensor may be provided at a central position of the cleaning device 10, and the position may be a depth of the central position of the cleaning device 10 in the liquid. The first sensor may be, but is not limited to, a pressure sensor, an ultrasonic sensor, an optical sensor, a distance measuring sensor, an infrared sensor, a distance code disk, and the like. The first sensor and the mode switching member 510 may further control the cleaning device 10 to move at a preset depth. For example, the cleaning device 10 performs underwater cleaning at the preset depth or moves at the preset depth toward a charging apparatus provided at the wall of the pool.

In some embodiments, the cleaning device 10 may further include a processor (not shown in the figure). The processor may be a micro-controller, an embedded processor, an application-specific integrated circuit (ASIC), or the like. The processor may obtain various pieces of data information of the cleaning device 10 and analyze the obtained data information to control various components of the cleaning device 10. When the cleaning device 10 needs to be switched from the position under the water surface 30 to the position on the water surface 30, the processor may obtain the position of the cleaning device 10 in real time from the first sensor. When the position of the cleaning device 10 meets a preset condition, the processor may control the buoyancy adjustment part 5112 to increase the volume of the gas in the buoyancy cavity 5111. The preset condition may be that the position of the cleaning device 10 is higher than a preset height. When a depth of the liquid in the target region 40 is fixed, the processor may determine whether the position of the cleaning device 10 meets the preset condition to determine whether the buoyancy cavity air inlet 5113 of the cleaning device 10 is above the water surface 30. When the position of the cleaning device 10 shown in FIG. 6 meets the preset condition, the processor may determine that the buoyancy cavity air inlet 5113 of the cleaning device 10 is above the water surface 30, the processor may control the buoyancy cavity pump to drive the liquid to be discharged from the buoyancy cavity 5111, and air may enter the buoyancy cavity 5111 through the buoyancy cavity air inlet 5113, to increase the volume of the gas in the buoyancy cavity 5111 and increase the buoyancy force applied to the cleaning device 10. When the buoyancy force applied to the cleaning device 10 in the vertical direction is greater than gravity of the cleaning device 10, the cleaning device 10 shown in FIG. 6 is switched to a posture of the cleaning device 10 shown in FIG. 7.

In some embodiments, the cleaning device 10 may further include a second sensor (not shown in the figure). The second sensor may be configured to detect in real time whether the buoyancy cavity air inlet 5113 of the buoyancy cavity 5111 is exposed to the air. For example, the second sensor may be an ultrasonic sensor. The second sensor may be provided at the buoyancy cavity air inlet 5113 of the buoyancy cavity 5111. In some embodiments, the second sensor may alternatively be provided at other positions on the cleaning device 10 and obtain, through position conversion, a detection result of whether the buoyancy cavity air inlet 5113 is exposed to the air.

In some embodiments, when the cleaning device 10 needs to be switched from the position under the water surface 30 to the position on the water surface 30, the processor may obtain the detection result of whether the buoyancy cavity air inlet 5113 of the buoyancy cavity 5111 is exposed to the air. When the detection result indicates that the buoyancy cavity air inlet 5113 is exposed to the air, the buoyancy adjustment part 5112 is controlled to increase the volume of the gas in the buoyancy cavity 5111, so that the cleaning device 10 is switched from the position under the water surface 30 to the position on the water surface 30. For details about content that the processor controls the buoyancy adjustment part 5112 to increase the volume of the gas in the buoyancy cavity 5111 to switch the cleaning device 10 from the position under the water surface 30 to the position on the water surface 30, refer to the above description.

When the cleaning device 10 needs to be switched from the position on the water surface 30 to the position under the water surface 30, the processor may control the buoyancy adjustment part 5112 to reduce the volume of the gas in the buoyancy cavity 5111. For details about a moment at which the cleaning device 10 needs to be switched from the position on the water surface 30 to the position under the water surface 30, refer to FIG. 18 and related descriptions. The gas is discharged from the buoyancy cavity 5111 through the connection duct to reduce the volume of the gas in the buoyancy cavity 5111 to reduce the buoyancy force, so that the cleaning device 10 is switched from the position on the water surface 30 to the position under the water surface 30.

The buoyancy adjustment assembly 511 is provided to adjust the magnitude of the buoyancy force applied to the cleaning device 10 in the vertical direction, so that the cleaning device 10 is flexibly switched between the position on the water surface 30 and the position under the water surface 30. This improves operating efficiency and reliability of the cleaning device 10 in the liquid environment. The first sensor or the second sensor is provided, so that the cleaning device 10 can automatically determine an environment in which the buoyancy cavity air inlet 5113 is located. This improves the use efficiency of the cleaning device 10.

In some embodiments, switching of the cleaning device 10 between the position on the water surface 30 and the position under the water surface 30 includes operating from the first motion state to the third motion state and operating from the third motion state to the first motion state. It may be understood that switching of the cleaning device 10 between the first motion state and the third motion state may be implemented by using the mode switching member 510, the first sensor, and the second sensor that are provided in the cleaning device 10.

When the buoyancy force is adjusted with gas in the buoyancy cavity 5111, and the buoyancy cavity air inlet 5113 of the buoyancy cavity 5111 is located above the water surface 30, the buoyancy cavity pump is started to adjust the volume of the gas in the buoyancy cavity 5111. In this case, the cleaning device 10 may be switched from the first motion state to the second motion state by using the mode switching member 510 until the buoyancy cavity air inlet 5113 is exposed above the water surface 30. Then, the posture of the cleaning device 10 is adjusted until the cleaning device 10 is in the third motion state. In this way, the cleaning device 10 is switched from the position under the water surface 30 to the position on the water surface 30. After the cleaning device 10 completes water surface cleaning, the filtering box 711 is cleaned at the water surface 30, or the cleaning device 10 is charged at the water surface 30, the cleaning device 10 needs to be switched from the third motion state to the first motion state to continue cleaning the bottom of the pool. In this case, the buoyancy cavity pump may be started or the volume of the gas in the buoyancy cavity 5111 may be adjusted when the cleaning device 10 is in the third motion state, to reduce the buoyancy force. The cleaning device 10 is switched from the third motion state to the first motion state under the gravity of the cleaning device 10. In addition, a posture sensor provided on the cleaning device 10 may cooperate with a controller to control the posture of the cleaning device 10 to be stable during state switching.

Certainly, the cleaning device 10 may alternatively be first switched from the third motion state to the second motion state and then switched from the second motion state to the first motion state. In this case, the cleaning device 10 moves until the front portion of the cleaning device 10 abuts against the target side wall 402, and then the volume of the gas in the buoyancy cavity 5111 is adjusted. The gas is discharged through the buoyancy cavity air inlet 5113, and the liquid enters the buoyancy cavity 5111. In addition, because the liquid enters the buoyancy cavity 5111 from the bottom of the buoyancy cavity 5111 in a process of adjusting the volume of the gas in the buoyancy cavity 5111, the cleaning device 10 is switched from the third motion state to the second motion state in combination with the action of the main water pump 210. As the volume of the gas in the buoyancy cavity 5111 is reduced, the cleaning device 10 moves downward along the target side wall 402 until the buoyancy cavity 5111 is filled with liquid, and the buoyancy cavity air inlet 5113 or the device air inlet submerges under the water surface 30. Under the action of the moving assembly 110, the cleaning device 10 moves along the target side wall 402 toward the target bottom wall 401 until the cleaning device 10 abuts against the target bottom wall 401, and then is switched from moving on the target side wall 402 to moving on the target bottom wall 401, thereby completing an entire switching process.

When the buoyancy force is adjusted with liquid in the buoyancy cavity 5111, the buoyancy cavity 5111 may be a rigid and confined cavity, and water is filled into or discharged from the buoyancy cavity 5111 by using the buoyancy adjustment part 5112. When water is filled into the buoyancy cavity 5111 by using the buoyancy adjustment part 5112, the gas in the buoyancy cavity 5111 is discharged, so that the cleaning device 10 can conveniently submerge. When water is discharged from the buoyancy cavity 5111 by using the buoyancy adjustment part 5112, the liquid is discharged from the buoyancy cavity 5111 to reduce the overall gravity of the cleaning device 10, so that the cleaning device 10 can conveniently float up. The cleaning device 10 may be switched from the first motion state to the third motion state by discharging the water from the buoyancy cavity 5111 and by using another upward force. In this case, the cleaning device 10 does not need to be switched to the second motion state. The cleaning device 10 may be switched from the third motion state to the first motion state by inputting water into the buoyancy cavity 5111 and by using another downward force.

When the buoyancy force is adjusted with gas in the buoyancy cavity 5111, the volume of the gas in the buoyancy cavity 5111 is adjusted to be a gas volume threshold, so that forces applied to the cleaning device 10 in the vertical direction are balanced. In this way, when the cleaning device 10 cleans the wall of the pool, the cleaning device 10 can be attached to the wall of the pool in the vertical direction and better clean the wall of the pool. When the cleaning device 10 is in the third motion state, there is a first volume of the gas in the buoyancy cavity 5111. When the cleaning device 10 is in the first motion state, there is a second volume of the gas in the buoyancy cavity 5111. The gas volume threshold is a value between the second gas volume and the first gas volume.

Similarly, when the buoyancy force is adjusted with liquid in the buoyancy cavity 5111, the volume of the liquid in the buoyancy cavity 5111 is adjusted to be a liquid volume threshold, so that forces applied to the cleaning device 10 in the vertical direction are balanced. When the cleaning device 10 cleans the wall of the pool, the cleaning device 10 can be attached to the wall of the pool in the vertical direction and better clean the wall of the pool. When the cleaning device 10 is in the third motion state, there is a first volume of liquid in the buoyancy cavity 5111. When the cleaning device 10 is in the first motion state, there is a second volume of liquid in the buoyancy cavity 5111. The liquid volume threshold is a value between the first liquid volume and the second liquid volume.

In some embodiments, the filtering mechanism 700 includes a filtering box cover 720 and a filtering box 711. The filtering box cover 720 is detachably or pivotally connected to the cleaning device body 101. At least a part of the buoyancy cavity 5111 is located between the filtering box cover 720 and the filtering box 711. The filtering box cover 720, the buoyancy cavity 5111, and the filtering box 711 are sequentially stacked vertically. The filtering box cover 720 may be mounted on or detached from the cleaning device body 101. The filtering box cover 720 may be integrally or separately connected to the buoyancy cavity 5111. The filtering box cover 720 may rotate or be flipped to the rear portion of the cleaning device body 101. The filtering box cover 720 may be integrally or separately connected to the buoyancy cavity 5111. The filtering box 711 is conveniently removed in the above manner.

The filtering box 711 may be removed in various manners. A first manner for removing the filtering box 711 is removing the filtering box 711 after the filtering box cover 720 and the buoyancy cavity 5111 are synchronously opened. In other words, the filtering box cover 720 and the buoyancy cavity 5111 are integrally connected. The filtering box cover 720 is detachably or pivotally connected to the cleaning device body 101. The buoyancy cavity 5111 is removed synchronously with the filtering box cover 720. A second manner for removing the filtering box 711 is removing the filtering box 711 after the buoyancy cavity 5111 and the filtering box cover 720 are opened separately. In other words, the filtering box cover 720 is separately connected to the buoyancy cavity 5111. The filtering box cover 720 is detachably or pivotally connected to the cleaning device body 101. A third manner for removing the filtering box 711 is removing the filtering box 711 while the filtering box cover 720 and the buoyancy cavity 5111 are opened. In other words, the filtering box cover 720, the buoyancy cavity 5111, and the filtering box 711 are removed simultaneously. The filtering box 711 may be fixedly connected or detachably connected to the buoyancy cavity 5111 or the filtering box cover 720. After the buoyancy cavity 5111, the filtering box cover 720, and the filtering box 711 are removed or detached from the cleaning device body 101, the filtering box 711 may be separated from the filtering box cover 720 or the buoyancy cavity 5111 again to dump garbage. Alternatively, the filtering box 711, the buoyancy cavity 5111, and the filtering box cover 720 do not need to be separated from each other, and a garbage dumping opening is provided at the bottom of the filtering box 711. The garbage is discharged through the garbage dumping opening.

In some other embodiments, the buoyancy cavity 5111 may serve as a filtering box cover 720 of the filtering box 711. When the filtering box 711 needs to be removed, the buoyancy cavity 5111 is first detached from the cleaning device body 101, and then the filtering box 711 is removed. Alternatively, the buoyancy cavity 5111 and the filtering box 711 are simultaneously removed from the cleaning device body 101, and then the garbage collected in the filtering box 711 is dumped. The buoyancy cavity 5111 and the filtering box 711 are separately removed. Alternatively, after the buoyancy cavity 5111 and the filtering box 711 are removed or detached from the cleaning device body 101 as a whole, the garbage dumping opening is provided at the bottom of the filtering box 711, so that the garbage is directly dumped. Alternatively, after the buoyancy cavity 5111 and the filtering box 711 are removed or detached from the cleaning device body 101 as a whole, the buoyancy cavity 5111 and the filtering box 711 are separated, and then the garbage in the filtering box 711 is dumped. In this case, the garbage dumping opening may be provided at any position on the filtering box 711.

In some embodiments, the buoyancy adjustment part 5112 is provided on the cleaning device body 101. When the buoyancy adjustment part 5112 is connected to the buoyancy cavity 5111, the buoyancy cavity 5111 is docked with the cleaning device body 101 through a docking part.

The device air inlet is connected to the buoyancy cavity air inlet 5113 through the first connection duct, and the device liquid inlet is connected to the buoyancy cavity liquid inlet 5114 through the second connection duct. When the buoyancy cavity 5111 needs to be removed from the cleaning device 10, there may be a risk of pulling the first connection duct and the second connection duct. Therefore, in this embodiment, the first connection duct is divided into a first connection sub-duct (not shown in the figure) and a second connection sub-duct (not shown in the figure), and the second connection duct is divided into a third connection sub-duct (not shown in the figure) and a fourth connection sub-duct (not shown in the figure), so that the risk of pulling the first connection duct and the second connection duct can be reduced. This improves the use performance of the cleaning device 10.

Specifically, the first connection duct includes the first connection sub-duct and the second connection sub-duct. The buoyancy cavity 5111 is provided with the first connection sub-duct. The cleaning device body 101 is provided with the second connection sub-duct. One end of the first connection sub-duct communicates with the buoyancy cavity air inlet 5113. One end of the second connection sub-duct communicates with the device air inlet. When the buoyancy cavity 5111 is mounted above the filtering box 711, the other end of the first connection sub-duct is connected to the other end of the second connection sub-duct in a sealed manner. A first rigid sub-connector is provided at the other end of the first connection sub-duct. A second rigid sub-connector is provided at the other end of the second connection sub-duct. The first rigid sub-connector is connected to the second rigid sub-connector in a sealed manner.

The buoyancy cavity 5111 is provided with the third connection sub-duct. The cleaning device body 101 is provided with the fourth connection sub-duct. One end of the third connection sub-duct communicates with the buoyancy cavity liquid inlet 5114. One end of the fourth connection sub-duct communicates with the device liquid inlet. When the buoyancy cavity 5111 is mounted above the filtering box 711, the other end of the third connection sub-duct is connected to the other end of the fourth connection sub-duct in a sealed manner. A third rigid sub-connector is provided at the other end of the third connection sub-duct. A fourth rigid sub-connector is provided at the other end of the fourth connection sub-duct. The third rigid sub-connector is connected to the fourth rigid sub-connector in a sealed manner.

In some other embodiments, the filtering mechanism 700 includes the filtering box cover 720. The filtering box cover 720 is pivotally connected to the cleaning device body 101. The filtering box cover 720 is fixedly connected to the buoyancy cavity 5111, and the buoyancy cavity 5111 moves with the filtering box cover 720. When the filtering box cover 720 is rotatably connected to the cleaning device body 101, the buoyancy cavity 5111 rotates with the filtering box cover 720 and is removed. In this case, the filtering box 711 is directly removed. Alternatively, the filtering box cover 720 is separately connected to the buoyancy cavity 5111. When the filtering box cover 720 is rotatably connected to the cleaning device body 101, the buoyancy cavity 5111 and the filtering box 711 are removed separately and successively, or the buoyancy cavity 5111 and the filtering box 711 are removed integrally and simultaneously. The filtering box cover 720 rotates from the top of the cleaning device body 101 toward the rear portion of the cleaning device body 101. The filtering box 711 is conveniently removed in the above manner. This improves use convenience.

Specifically, a rotating structure (not shown in the figure) is provided at a position at which the filtering box cover 720 rotates relative to the cleaning device body 101. The rotating structure may include a rotating part (not shown in the figure) and a rotating groove (not shown in the figure) mating with the rotating part. The filtering box cover 720 may rotate manually or automatically. For example, the filtering box cover 720 is connected to a drive assembly. The drive assembly drives the filtering box cover 720 to rotate relative to the body of the cleaning device 10, so that the filtering box cover 720 rotates automatically.

When the buoyancy cavity 5111 rotates with the filtering box cover 720 on the cleaning device body 101, the first connection duct and the second connection duct pass through the rotating part without cutting or dividing each of the first connection duct and the second connection duct. This improves stability of the buoyancy adjustment assembly 511 in adjusting the magnitude of the buoyancy force. In other embodiments, the filtering box cover 720 is rotatably connected to the cleaning device body 101, the buoyancy cavity 5111 is detachably connected in the cleaning device body 101, and the buoyancy cavity 5111 does not rotate with the filtering box cover 720. Alternatively, the filtering box cover 720 is liftably connected to the cleaning device body 101, and the filtering box cover 720 is separately or integrally connected to the buoyancy cavity 5111. Alternatively, the filtering box cover 720 is detachably connected to the cleaning device body 101, and in a process of opening the filtering box cover 720, the buoyancy cavity 5111 and/or the filtering box 711 are/is automatically ejected under the action of an elastic structure (not shown in the figure), so that the buoyancy cavity 5111 and/or the filtering box 711 are/is automatically removed. This improves user experience.

In some embodiments, in a process of mounting the buoyancy cavity 5111 to the filtering box 711, the buoyancy cavity 5111 covers an opening (not shown in the figure) of the filtering box. In this case, the buoyancy cavity 5111 is configured to seal the filtering box 711. This reduces a risk that garbage flows out from the opening of the filtering box. A sealing structure may be provided at a position at which the bottom of the buoyancy cavity 5111 is in contact with the opening of the filtering box. The sealing structure (not shown in the figure) is provided to further improve sealing performance at the contact position, so that garbage is prevented from flowing out from the position in which the bottom of the buoyancy cavity 5111 is in contact with the opening of the filtering box. In addition, the sealing structure can also play a cushioning role to prevent the buoyancy cavity 5111 from directly colliding with and touching the filtering box 711.

In some embodiments, the filtering box 711 may be a hollow frame. The filtering box 711 is provided with a filtering layer. The filtering layer is configured to perform filtering. There may be one, two, or more filtering boxes 711. When there are two filtering boxes 711, one filtering box 711 is sleeved within the other filtering box 711. Filtering meshes of filtering layers of adjacent filtering boxes 711 are at least partially provided in a staggered manner. This can improve a filtering effect of the filtering mechanism 700 and reduce a corresponding mesh count of a filtering mesh of an original filtering box 711 by using double-layer filtering boxes 711, thereby conveniently cleaning the filtering layer.

In some embodiments, an in-position detection mechanism for the filtering box may be configured to detect whether the filtering box 711 is mounted in position on the cleaning device body 101 to ensure that, only after the filtering box 711 is mounted in position, the cleaning device 10 can operate normally. This prevents ineffective detection or a poor detection effect for the filtering box 711, and better improves intelligence of the cleaning device 10.

Specifically, the in-position detection mechanism for the filtering box may include, but is not limited to, at least one of a sensing assembly (not shown in the figure), an inductance assembly (not shown in the figure), or a switch assembly (not shown in the figure), and a quantity of detection manners can be increased, which may be selected based on an actual requirement. For example, the in-position detection mechanism for the filtering box may be the sensing assembly, the inductance assembly, or the switch assembly. Alternatively, the in-position detection mechanism for the filtering box may include all of the sensing assembly, the inductance assembly, and the switch assembly. The sensing assembly may detect, in a sensing manner, whether the filtering box 711 is in position. A Hall element and a Hall magnet may mate with each other to implement the sensing manner. The inductance assembly may detect, in an inductance manner, whether the filtering box 711 is in position. The switch assembly detects, by using a switch part, whether the filtering box 711 is in position.

When the in-position detection mechanism for the filtering box includes the sensing assembly, the sensing assembly includes a sensing part and a sensing mating part. One of the sensing part and the sensing mating part is provided on the filtering box 711. The other of the sensing part and the sensing mating part is provided on the cleaning device body 101. Specific positions of the sensing part and the sensing mating part may be determined based on an actual situation. Alternatively, each of the sensing part and the sensing mating part is not provided on the filtering box 711, but is provided at other positions. The filtering box 711 moves to drive the sensing part and the sensing mating part to mate with each other to detect whether the filtering box 711 is mounted in position. The sensing part may be a Hall sensing part, and the sensing mating part may be a Hall magnet.

In some embodiments, the cleaning device 10 further includes a cleaning mechanism 400. The cleaning mechanism 400 includes a first cleaning part 410. The first cleaning part 410 may be configured to clean the target bottom wall 401 and the target side wall 402 of the swimming pool. The cleaning device 10 may include one or more first cleaning parts 410. The first cleaning part 410 may be provided at the bottom of and/or on a side of the cleaning device 10. As shown in FIG. 1, one first cleaning part 410 is provided at each of a front end and a rear end of the bottom of the cleaning device 10. When the cleaning device 10 moves on the target bottom wall 401 of the swimming pool, the first cleaning part 410 may clean the target bottom wall 401 of the swimming pool, for example, sweeping away debris or algae. When the cleaning device 10 moves on the target side wall 402 of the swimming pool, the first cleaning part 410 may further clean the target side wall 402 of the swimming pool.

Specifically, the first cleaning part 410 is provided at a front position on the bottom of the cleaning device 10. The liquid inlet portion 1011 is provided close to the first cleaning part 410. The first cleaning part 410 is configured to draw garbage into the filtering mechanism 700. When the cleaning device 10 cleans the target bottom wall 401 and the target side wall 402, the first cleaning part 410 cleans a to-be-cleaned surface and draws garbage into the filtering mechanism 700 through the liquid inlet portion 1011. When the cleaning device 10 performs water surface cleaning, the first cleaning part 410 is at least partially located under the water surface 30, and the first cleaning part 410 acts as an agitating part and rotates counterclockwise to draw garbage on the water surface 30 into the filtering mechanism 700 through the liquid inlet portion 1011. The first cleaning part 410 may be used for both underwater cleaning and water surface cleaning. When the cleaning device 10 is in the first motion state, the liquid inlet portion 1011 and the first cleaning part 410 are used, and when the cleaning device 10 is in the third motion state, the liquid inlet portion 1011 and the first cleaning part 410 are used. This reduces production costs while cleaning efficiency is ensured. In addition, it is defined that the first cleaning part 410 is at least partially located under the water surface 30, and the liquid inlet portion 1011 is at least partially located above the water surface 30, so that a garbage cleaning effect is optimized, and the cleaning effect of the cleaning device 10 is improved.

In some embodiments, the cleaning device 10 includes a movement propulsion mechanism (not shown in the figure). The movement propulsion mechanism is configured to allow the cleaning device 10 to move in water and move on the water surface 30. The movement propulsion mechanism includes the moving assembly 110. The moving assembly 110 is provided at the bottom of the cleaning device body 101 and configured to drive the cleaning device 10 to move on the target bottom wall 401 and the target side wall 402. The moving assembly 110 includes two first moving wheels 1121 provided at front portions of two sides of the cleaning device body 101. The moving assembly 110 may be in transmission connection to the first cleaning part 410, that is, the first cleaning part 410 moves with the moving assembly 110. Alternatively, the first cleaning part 410 is powered by a separate drive assembly, so that the moving assembly 110 and the first cleaning part 410 operate independently.

In some embodiments, the first cleaning part 410 includes a roller brush shaft (not shown in the figure) and blades (not shown in the figure) radially extending outward along the roller brush shaft. The blade may be linear or non-linear. A plurality of blades may be arranged in a length direction of the roller brush shaft. A channel between adjacent blades in the length direction of the roller brush shaft spirally winds around the roller brush shaft. Alternatively, a channel formed between adjacent blades annularly winds around the length direction of the roller brush shaft.

When the cleaning device 10 cleans the bottom or the wall of the pool, all the blades of the first cleaning part 410 are located under the water surface. The first cleaning part 410 cleans garbage on the bottom or the wall of the pool and draws the garbage into the liquid inlet portion 1011. When the cleaning device 10 performs water surface cleaning, some blades of the first cleaning part 410 are at least partially located under the water surface 30. Some blades clean garbage on the water surface and play an agitating role, and can also draw the garbage into the liquid inlet portion 1011.

The first cleaning part 410 includes one, two, or more first roller brushes (not shown in the figure). The first roller brush includes the roller brush shaft and the blades. In some embodiments, when the first cleaning part 410 includes one first roller brush, the first roller brush is in transmission connection to one of the two first moving wheels 1121. The first roller brush rotates with the first moving wheel 1121. The two first moving wheels 1121 may be driven by a same moving motor or separate moving motors. Alternatively, the first roller brush may be driven by a separate roller brush motor.

When the two first moving wheels 1121 are driven by a same moving motor, the cleaning device 10 cannot be driven by a drive paddle 11211 on a side of each first moving wheel 1121 to make a turn or turn around. In this case, a propulsion assembly 130 needs to be provided on the cleaning device 10, so that the cleaning device 10 can conveniently make a turn or turn around. When the two first moving wheels 1121 are respectively driven by different moving motors, the two moving motors rotate at different speeds to adjust rotation speeds of the first moving wheels 1121 on the two sides or adjust the first moving wheels to perform steering. In this way, the cleaning device can make a turn via the drive paddles 11211 on the two sides of the first moving wheel 1121. In this case, the first roller brush is connected to one of the two first moving wheels 1121, and the first moving wheel 1121 always remains at a rotation speed to drive the first roller brush to rotate, to ensure that when the water surface is cleaned, the garbage on the water surface can be effectively guided to the liquid inlet portion 1011.

When the first roller brush is driven by a separate drive motor, the agitating effect of the first roller brush on the garbage on the water surface is ensured in a water surface cleaning process. The first roller brush is connected to the first moving wheel 1121 on one side of the moving assembly 110 or connected to the drive motor, so that an even agitating effect can be ensured when the cleaning device 10 performs water surface cleaning. For details about a structure of the drive paddle 11211, refer to the following description.

In some embodiments, when the first cleaning part 410 includes two first roller brushes, that is, the first cleaning part is a two-segment cleaning part, the two first roller brushes are provided in parallel in the cleaning cavity 1091. The moving assembly 110 includes two first moving wheels 1121. One first moving wheel 1121 is in transmission connection to one first roller brush, that is, one first moving wheel 1121 drives one first roller brush to rotate. The other first moving wheel 1121 is in transmission connection to the other first roller brush, that is, the other first moving wheel 1121 drives the other first roller brush to rotate. The two first moving wheels 1121 may be driven by a same moving motor or separate moving motors. Alternatively, the first roller brush may be driven by a separate roller brush motor.

The two first roller brushes may rotate in a same direction or opposite directions, or may rotate at a same speed or different speeds. When an outer side of each first moving wheel 1121 is provided with a drive paddle 11211, the cleaning device 10 can move or make a turn by using the drive paddle 11211 during water surface cleaning.

Specifically, when the two first moving wheels 1121 rotate synchronously, the cleaning device 10 moves substantially in a straight line, and the two first moving wheels 1121 drive the two first roller brushes to rotate counterclockwise synchronously to evenly guide the garbage on the water surface to the liquid inlet portion 1011. When the two first moving wheels 1121 rotate asynchronously, the drive paddles 11211 on the two sides form a torque on the cleaning device 10, so that the cleaning device 10 can make a turn or turn around. In this case, asynchronous rotation is classified into two cases: rotating in a same direction and at different speeds and rotating in opposite directions. When the two first moving wheels 1121 rotate in the same direction and at different speeds, the two first roller brushes also rotate in the same direction and at different speeds, that is, rotate counterclockwise but at different speeds. In this case, the two first roller brushes guide the garbage on the water surface to the liquid inlet portion 1011, but a guiding effect is different. When the two first moving wheels 1121 rotate in opposite directions, the two first roller brushes also rotate in opposite directions, that is, one segment of the first roller brush rotates counterclockwise, and the other segment of the first roller brush rotates clockwise. In this case, the segment of the first roller brush rotating counterclockwise effectively guides the garbage, and the segment of the first roller brush rotating clockwise ineffectively or even adversely guides the garbage. Certainly, the two first roller brushes may also be both controlled by separate roller brush motors or a same roller brush motor instead of being controlled by the first moving wheels 1121 in a transmission manner. In this way, it can be ensured that the first roller brush can effectively guide the garbage on the water surface during water surface cleaning.

In some embodiments, the cleaning mechanism 400 includes a second cleaning part (not shown in the figure). The second cleaning part is provided inside the filtering box 711 and located at the filtering box inlet 716. When the cleaning device 10 performs water surface cleaning, the second cleaning part is configured to draw garbage or other debris on the water surface 30 into the filtering box 711, to improve water surface cleaning efficiency. When the moving assembly 110 is connected to the first cleaning part 410, the moving assembly 110 may be connected to the second cleaning part, that is, both the first cleaning part 410 and the second cleaning part move with the moving assembly 110. Alternatively, when the moving assembly 110 is not connected to the first cleaning part 410, the first cleaning part 410 is driven by the roller brush motor. In this case, the second cleaning part may be connected to the moving assembly 110, or the second cleaning part may be connected to the roller brush motor. Alternatively, the second cleaning part is powered by a drive motor, so that the moving assembly 110, the first cleaning part 410, and the second cleaning part operate independently.

The cleaning device 10 may only include the first cleaning part 410. When the cleaning device 10 performs water surface cleaning and underwater cleaning, the cleaning device 10 shares the first cleaning part 410. Alternatively, the cleaning device 10 includes both the first cleaning part 410 and the second cleaning part. The first cleaning part 410 cooperates with the second cleaning part to improve cleaning efficiency of the cleaning device 10.

In some embodiments, the cleaning device body 101 includes a first device housing 109. The cleaning cavity 1091 is provided at a front end of the first device housing 109. The first cleaning part 410 is rotatably provided inside the cleaning cavity 1091. An inner side wall of the cleaning cavity 1091 is close to the filtering mechanism 700, and the inner side wall is provided with the liquid inlet portion 1011. The liquid inlet portion 1011 communicates with the cleaning cavity 1091. The liquid inlet portion 1011 directly or indirectly communicates with the filtering box inlet 716 of the filtering box 711. Under the action of the first cleaning part 410, garbage enters the filtering box 711 sequentially through the cleaning cavity 1091, the liquid inlet portion 1011, and the filtering box inlet 716.

There is a gap between a periphery of the first cleaning part 410 and the inner side wall of the cleaning cavity 1091, so that water can enter the cleaning cavity 1091 more conveniently. In addition, the periphery of the first cleaning part 410 is spaced from the liquid inlet portion 1011, so that water can enter the filtering box 711 through the liquid inlet portion 1011 more conveniently. When the cleaning device 10 performs water surface cleaning, a lowermost end of the first cleaning part 410 can be at least partially located under the water surface 30, and the liquid inlet portion 1011 is at least partially located above the water surface 30. The garbage can enter the filtering box 711 more easily in the above disposition manner.

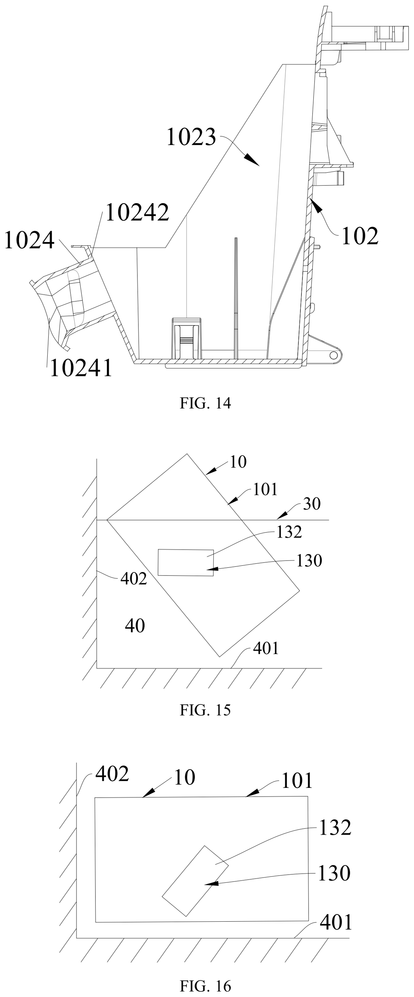

Refer to FIG. 13 and FIG. 14. FIG. 13 is a schematic structural diagram of a second device housing of a cleaning device according to the present disclosure. FIG. 14 is a schematic cross-sectional diagram of a second device housing of a cleaning device according to the present disclosure. In some embodiments, with reference to FIG. 1 to FIG. 12, the cleaning device body 101 includes a second device housing 102. A filtering box cavity 1023 is formed in the second device housing 102. The filtering box cavity 1023 is configured to accommodate the filtering box 711. A side of the second device housing 102 is close to the liquid inlet portion 1011, and the side is provided with a liquid inlet channel 1024. The liquid inlet channel 1024 communicates with the filtering box cavity 1023. The liquid inlet channel 1024 is a channel configured to allow garbage and water to enter the filtering box inlet 716. The liquid inlet channel 1024 is internally hollow. The liquid inlet channel 1024 extends in a lateral direction of the cleaning device 10. The liquid inlet channel 1024 includes a first port 10241 away from the filtering box inlet 716 and a second port 10242 close to the filtering box inlet 716, and a size of the first port is greater than that of the second port. The liquid inlet channel 1024 may be, but is not limited to, of a truncated cone or trapezoid structure with the interior thereof being hollow, and a channel between the first port 10241 and the second port 10242 is smooth.

Specifically, the size of the first port 10241 may be in proportion to the size of the second port 10242. For example, a ratio of the size of the first port 10241 to the size of the filtering box inlet 716 may not be greater than 10:1, to prevent excessive garbage or debris from entering the filtering box inlet 716 at the same time, so that the filtering box inlet 716 is prevented from being clogged. The liquid inlet channel 1024 is provided, so that garbage at a wide water surface 30 can be gathered together and enter the filtering box inlet 716. This avoids the following case: The water surface cleaning efficiency of the cleaning device 10 is reduced due to the excessively small filtering box inlet 716.

Further, the first port 10241 of the liquid inlet channel 1024 sealingly abuts against and communicates with a periphery of the liquid inlet portion 1011. A sealing structure may be provided at a joint between the first port 10241 and the periphery of the liquid inlet portion 1011. In a process of mounting the filtering box 711 in the filtering box cavity 1023, the filtering box inlet 716 sealingly abuts against and communicates with the second port 10242 of the liquid inlet channel 1024. A sealing structure may be provided at a joint between the filtering box inlet 716 and a periphery of the second port 10242. This improves sealing performance and reduces occurrence of liquid leakage in the above sealingly abutting manner.

In some embodiments, the cleaning device 10 includes a drive mechanism (not shown in the figure). The drive mechanism includes a main water pump 210. The cleaning device 10 includes a liquid outlet portion 1012. The drive mechanism is provided at the rear portion of the cleaning device body 101. The drive mechanism is configured to generate a suction force to form a water flow channel sequentially passing through the liquid inlet portion 1011, the filtering box inlet 716, the filtering box 711, a filtering box outlet, the main water pump 210, and the liquid outlet portion 1012. The main water pump 210 generates a suction force, so that the garbage in water or on the water surface 30 can be sucked in the filtering box 711 through the liquid inlet portion 1011.

When the cleaning device 10 is in the third motion state, the cleaning device 10 performs water surface cleaning. A majority of the blades of the first roller brush are located above the water surface 30, and at least some of blades at a lower end of the first roller brush are located under the water surface 30. As the first roller brush rotates counterclockwise, the garbage on the water surface is guided to the liquid inlet portion 1011. The liquid inlet portion 1011 is at least partially located under the water surface 30, so that the garbage guided by the first roller brush can smoothly enter the filtering mechanism 700 through the liquid inlet portion 1011. In the water surface cleaning process, the main water pump 210 operates to form negative pressure at the liquid inlet portion 1011, so that the garbage can be smoothly sucked in the filtering mechanism 700 through the liquid inlet portion 1011. Under the guidance of the first cleaning part 410 and pumping of the main water pump 210, the garbage enters the filtering mechanism 700 more easily. This improves the cleaning efficiency of the cleaning device 10.

In some embodiments, as shown in FIG. 1, a first scraping blade 103 is provided on a surface of the bottom of the cleaning device body 101. The first scraping blade 103 extends in the lateral direction of the cleaning device body 101. When the cleaning device 10 cleans the to-be-cleaned surface, a negative pressure zone with higher negative pressure is formed among the first scraping blade 103, inner sides of the two first moving wheels 1121, and the first cleaning part 410. When the drive mechanism operates, the garbage can be more effectively sucked in the filtering mechanism 700 through the liquid inlet portion 1011 and then filtered out. This improves the cleaning effect.

Specifically, a second scraping blade (not shown in the figure) and/or a third scraping blade (not shown in the figure) are/is provided on the surface of the bottom of the cleaning device body 101. The second scraping blade is provided at one end of the first scraping blade 103. The second scraping blade is provided in substantially the same direction as the longitudinal direction of the cleaning device 10. The third scraping blade is provided at another end of the first scraping blade 103. The third scraping blade is provided in substantially the same direction as the longitudinal direction of the cleaning device 10. A negative pressure zone is formed among the first scraping blade 103, the second scraping blade, the third scraping blade, inner sides of the two first moving wheels 1121, and the first cleaning part 410. This further improves the cleaning effect. Each of the first scraping blade 103, the second scraping blade, and/or the third scraping blade may be made of a flexible material. This can reduce damage to the target bottom wall 401 or the target side wall 402. In addition, the above negative pressure zone can be formed. This improves the cleaning effect.

In some embodiments, the action force applied to the cleaning device 10 in the vertical direction may include the first driving force applied to the cleaning device 10 in the vertical direction. The mode switching member 510 includes a power adjustment assembly (not shown in the figure). When action forces are formed by using the power adjustment assembly in different directions, the power adjustment assembly can adjust the action forces, so that some action forces are applied in a first direction or a second direction. In other words, the power adjustment assembly is configured to adjust the first driving force applied to the cleaning device 10 in the vertical direction. Under the action of the power adjustment assembly, the cleaning device 10 is switched between the first motion state and the third motion state. The cleaning device 10 is switched from the first motion state to the third motion state under the action force applied in the first direction. The cleaning device 10 is switched from the third motion state to the first motion state under the action force applied in the second direction.

In some embodiments, the power adjustment assembly includes a first power adjustment assembly (not shown in the figure). The first power adjustment assembly is configured to adjust an action force applied to the cleaning device 10 in the first direction. The action force applied in the first direction is the first driving force in the vertical direction. The first driving force extends in the first direction. The first power adjustment assembly includes at least one of a first propulsion part, a biomimetic fin member, a lift propulsion assembly, or an umbrella assembly. For example, the first power adjustment assembly may include one, two, three, or four of the first propulsion part, the biomimetic fin member, the lift propulsion assembly, and the umbrella assembly. For example, the first power adjustment assembly may include the first propulsion part, or the first power adjustment assembly may include the first propulsion part and the biomimetic fin member, or the first power adjustment assembly may include the first propulsion part, the biomimetic fin member, the lift propulsion assembly, and the umbrella assembly.

In some embodiments, the power adjustment assembly includes a second power adjustment assembly (not shown in the figure). The second power adjustment assembly is configured to adjust an action force applied to the cleaning device 10 in the second direction. The action force applied in the second direction is the first driving force in the vertical direction. The first driving force extends in the second direction. The second power adjustment assembly includes at least one of a first propulsion part or a biomimetic fin member. For example, the second power adjustment assembly may include the first propulsion part, or the second power adjustment assembly may include the biomimetic fin member, or the second power adjustment assembly may include the first propulsion part and the biomimetic fin member.

Each of the first power adjustment assembly and the second power adjustment assembly may be the first propulsion part, or each of the first power adjustment assembly and the second power adjustment assembly may be the biomimetic fin member.

In some embodiments, the first power adjustment assembly and the second power adjustment assembly may be a same assembly. In other words, a structure of the first power adjustment assembly may be the same as that of the second power adjustment assembly. Certainly, in some other embodiments, the structure of the first power adjustment assembly and the structure of the second power adjustment assembly may be different. Structures of the first power adjustment assembly and the second power adjustment assembly may be determined based on an actual requirement. This is not limited herein.

In some embodiments, the first power adjustment assembly or the second power adjustment assembly may include a plurality of biomimetic fin members (not shown in the figure). The biomimetic fin member may oscillate over the cleaning device 10, so that the cleaning device 10 is switched between the position on the water surface 30 and the position under the water surface 30. In this way, the cleaning device 10 can float up and submerge. The cleaning device 10 can operate stably in the liquid and can be quickly switched between the position under the water surface 30 and the position on the water surface 30 by using the biomimetic fin member. When the biomimetic fin member is not needed, the biomimetic fin member may be folded on a peripheral surface of the cleaning device 10. A plurality of oscillating bars oscillate, so that the biomimetic fin member oscillates over the cleaning device 10. The oscillating bars are driven by a drive assembly or the like to oscillate.

In some embodiments, the first power adjustment assembly includes a lift propulsion assembly (not shown in the figure). When the lift propulsion assembly flies out from the water surface 30, the cleaning device 10 may fly toward a station provided on a poolside, so that the cleaning device 10 can be charged or perform self-cleaning. When the lift propulsion assembly is not needed, the lift propulsion assembly may be folded on the peripheral surface of the cleaning device 10. For example, the lift propulsion assembly may include a plurality of rotor wings. The plurality of rotor wings may rotate, so that the cleaning device 10 flies out from the water surface 30.

In some embodiments, the first power adjustment assembly includes the umbrella assembly (not shown in the figure). The umbrella assembly is provided on the cleaning device 10. The umbrella assembly is configured to allow the cleaning device 10 to be switched from the position under the water surface 30 to the position on the water surface 30, so that the cleaning device 10 can float up. Further, the umbrella assembly includes a support skeleton and an umbrella surface. When the cleaning device 10 needs to float up, the support skeleton and the umbrella surface in the umbrella assembly are spread out to provide an upward buoyancy force, so that the cleaning device 10 can float up. When the cleaning device 10 does not need to float up, the umbrella assembly can be stored and folded.

In some embodiments, the cleaning device 10 is detachably connected to a first buoyancy module and/or a gravity module. The first buoyancy module and/or the gravity module are/is provided on a docking assembly provided in the target region 40. The docking assembly may be a station, a positioning post, or a positioning apparatus. The docking assembly is provided close to the target side wall 402 or located in the target region 40.

In some embodiments, the cleaning device 10 is telescopically connected to a second buoyancy module. The second buoyancy module floats on the water surface 30 of the target region 40. The second buoyancy module is made of foam, or the second buoyancy module may be a mechanical module, and the mechanical module is a part of the cleaning device 10.

In some embodiments, the cleaning device 10 includes a first functional module (not shown in the figure) and a second functional module (not shown in the figure). The first functional module includes different first functional sub-modules (not shown in the figure). The first functional sub-module may correspond to a mechanical module for the cleaning device 10 to move and operate on the water surface 30. The second functional module includes different second functional sub-modules (not shown in the figure). The second functional sub-module may correspond to a mechanical module for the cleaning device 10 to move and operate under the water surface 30. A density of the first functional sub-module is less than a density of the liquid in the target region 40.

In some embodiments, the action force applied to the cleaning device 10 in the vertical direction may include the first driving force applied to the cleaning device 10 in the vertical direction. The first power adjustment assembly may include the first propulsion part. The first propulsion part may be configured to adjust the first driving force applied to the cleaning device 10 in the vertical direction. The first propulsion part may include a first propeller. The first propeller may be configured to push the liquid to move in a first preset direction. The first preset direction may be a direction in which the first propeller pushes the liquid to be discharged. When the first propeller pushes the liquid to move in the first preset direction, a reaction force in a direction opposite to the first preset direction may be applied to the cleaning device 10. The reaction force may include the first driving force.

In some embodiments, the cleaning device 10 may further move in a horizontal direction of the target region 40. An action force applied to the cleaning device 10 in the horizontal direction may include a second driving force applied to the cleaning device 10 in the horizontal direction. The cleaning device 10 includes the movement propulsion mechanism. The movement propulsion mechanism includes the propulsion assembly 130, and the propulsion assembly 130 includes a second propulsion part. The second propulsion part is provided on a side surface of the cleaning device body 101. When the cleaning device 10 is in the third motion state, the second propulsion part is located under the water surface 30 and configured to drive the cleaning device 10 to move forward or backward on the water surface 30. The second propulsion part may be configured to adjust the second driving force applied to the cleaning device 10 in the horizontal direction. The second propulsion part may be any structure that can provide the second driving force. For example, the second propulsion part may be a screw propeller, and the screw propeller may be horizontally provided on the cleaning device 10. The screw propeller rotates, so that the cleaning device 10 can obtain the second driving force in the horizontal direction. The second driving force in the horizontal direction may be forward or backward. Under the second driving force, the cleaning device 10 may move forward or backward in the horizontal direction, or may suspend at a certain position in the liquid. The propulsion assemblies 130 are provided substantially symmetrically on the two sides of the cleaning device 10, respectively. When the cleaning device 10 needs to make a turn or turn around, power or a direction of each propulsion assembly 130 is adjusted.

Refer to FIG. 15 and FIG. 16. FIG. 15 is a first simplified structural diagram of a cleaning device floating on a water surface according to an embodiment of the present disclosure. FIG. 16 is a second simplified structural diagram of a cleaning device moving in water according to an embodiment of the present disclosure. The cleaning device 10 may include one or more second propellers 132. The second propeller 132 may be provided on a side of the cleaning device 10. It should be noted that when the second propeller 132 is provided on the side of the cleaning device 10, the second propeller 132 may be at least partially located under a position at which the cleaning device 10 floats on the water surface 30. When the cleaning device 10 floats on the water surface 30, a second propeller impeller of the second propeller 132 can rotate to push the liquid to move in a second preset direction to provide the cleaning device 10 with the second driving force in the horizontal direction. For example, when the second propeller 132 is provided on the side of the cleaning device 10, the second propeller 132 may be completely located under the position at which the cleaning device 10 floats on the water surface 30.

Specifically, the propulsion assembly 130 includes at least two second propellers 132 provided on the two sides of the cleaning device 10. When the cleaning device 10 is in the third motion state, that is, when the cleaning device 10 performs water surface cleaning, the second propeller 132 is at least partially located under the water surface 30, and an extension direction of the second propeller 132 is substantially parallel to the water surface. In this case, an included angle between the second preset direction and the horizontal direction is 0°, and the reaction force applied to the cleaning device 10 is fully converted into the second driving force in the horizontal direction. A distance between the second propeller 132 and the water surface 30 needs to reach a distance threshold. The distance threshold needs to be set in such a way that water sprayed by the second propeller 132 does not affect the garbage floating on the water surface 30, enabling a perpendicular distance between the second propeller 132 and the water surface 30 not to be too small, and a torque is not generated, enabling the perpendicular distance between the second propeller 132 and the water surface 30 not to be too large. Certainly, when the cleaning device 10 performs water surface cleaning, the second propeller 132 may alternatively be only partially located under the water surface 30. In this case, the second propeller 132 can still effectively provide a propulsion force for the cleaning device 10.

When the cleaning device 10 is in the third motion state, the second propeller 132 rotates forward, and the second propeller 132 may serve as a propeller for water surface cleaning and be configured to drive the cleaning device 10 to move forward or backward in the horizontal direction. When the cleaning device 10 is in the first motion state or the second motion state, that is, when the cleaning device 10 cleans the bottom or the wall of the swimming pool, the second propeller 132 may rotate reversely. In this case, water is sprayed downward from the second propeller 132 along the front portion of the cleaning device body 101, and the water sprayed from the second propeller 132 can be used to rinse an edge of the wall or a corner. This improves the cleaning efficiency.

In some embodiments, at least one second propeller 132 may be provided on each of a left side and a right side of the cleaning device 10. One second propeller 132 may be provided on each of the left side and the right side of the cleaning device 10. When the cleaning device 10 moves in the liquid, the cleaning device 10 may adjust power of a propeller motor of the second propeller 132 on each of the left side and the right side to adjust a speed at which the liquid is pushed by the second propeller 132 on each of the left side and the right side to move in the second preset direction, so that the cleaning device 10 can make a turn. For example, when the speed at which the liquid is pushed by the second propeller 132 on the left side to move in the second preset direction is greater than the speed at which the liquid is pushed by the second propeller 132 on the right side to move in the second preset direction, the cleaning device 10 may turn to the right under the action of the second propeller 132 on the left side.

In some embodiments, the cleaning device 10 includes at least one set of a first power water inlet portion (not shown in the figure) and a first power water outlet portion (not shown in the figure). The cleaning device 10 is provided with one set of the first power water inlet portion and the first power water outlet portion. The first propulsion part communicates with the first power water inlet portion and the first power water outlet portion. When the first propulsion part operates, liquid is sucked in through one of the first power water inlet portion and the first power water outlet portion and is discharged through the other of the first power water inlet portion and the first power water outlet portion. In this way, the cleaning device 10 obtains the first driving force in the vertical direction. The set of the first power water inlet portion and the first power water outlet portion extends in the vertical direction.

In some embodiments, the cleaning device 10 is provided with another set of the first power water inlet portion and the first power water outlet portion. The second propulsion part communicates with the first power water inlet portion and the first power water outlet portion. When the second propulsion part operates, liquid is sucked in through one of the first power water inlet portion and the first power water outlet portion of the another set and is discharged through the other of the first power water inlet portion and the first power water outlet portion of the another set. In this way, the cleaning device 10 obtains the second driving force in the horizontal direction. The another set of the first power water inlet portion and the first power water outlet portion extends in the horizontal direction.

The first power adjustment assembly may be, but is not limited to, the first propeller, a first drum fan, and a first water pump. The second power adjustment assembly may be, but is not limited to, the second propeller 132, a second drum fan, and a second water pump. The propeller, the drum fan, and the water pump communicate with the first power water inlet portion and the first power water outlet portion. The propeller, the drum fan, and the water pump rotate forward or reversely, so that the cleaning device 10 can move upward and downward in the vertical direction and move forward and backward in the horizontal direction. In this way, the cleaning device 10 can be switched between the position on the water surface 30 and the position under the water surface 30 and can be switched between a front position and a rear position in the liquid in the horizontal direction.

In some embodiments, the cleaning device 10 includes at least one set of a second power water inlet portion (not shown in the figure) and a second power water outlet portion (not shown in the figure). The second power water inlet portion and the second power water outlet portion are rotatably provided on the cleaning device 10. In other words, angles of the second power water inlet portion and the second power water outlet portion can be adjusted to change a flow direction of the liquid.

One group of first propulsion parts communicates with the second power water inlet portion and the second power water outlet portion. When the first propulsion parts operate, liquid is sucked in through one of the second power water inlet portion and the second power water outlet portion and is discharged through the other of the second power water inlet portion and the second power water outlet portion. Because the second power water inlet portion and the second power water outlet portion are rotatably provided on the cleaning device 10, the cleaning device 10 obtains propulsion forces in various directions. The propulsion forces include the first driving force in the vertical direction.

In some embodiments, the second propulsion parts communicate with the second power water inlet portion and the second power water outlet portion. When the second propulsion parts operate, liquid is sucked in through one of the second power water inlet portion and the second power water outlet portion of another set and is discharged through the other of the second power water inlet portion and the second power water outlet portion of the another set. Because the second power water inlet portion and the second power water outlet portion are rotatably provided on the cleaning device 10, the cleaning device 10 obtains propulsion forces in various directions. The propulsion forces include the second driving force in the horizontal direction.

The second power water inlet portion can rotate relative to the cleaning device 10 through cooperation between one power motor and one power transmission mechanism. The second power water outlet portion can rotate relative to the cleaning device 10 through cooperation between another power motor and another power transmission mechanism.

In some embodiments, the first power water inlet portion and the first power water outlet portion are provided on the cleaning device 10 to provide propulsion forces in various directions by adjusting a direction of a water spray duct (not shown in the figure). When the first propulsion part includes the water pump, the water pump communicates with the first power water outlet portion through the water spray duct. The water spray duct may extend at various angles. When the liquid enters or is discharged from the water spray duct, propulsion forces in various directions may be provided. When the first power water inlet portion, the first power water outlet portion, and the first propulsion part communicate, the propulsion forces may include the first driving force in the vertical direction. When the first power water inlet portion, the first power water outlet portion, and the second propulsion part communicate, the propulsion forces include the second driving force in the horizontal direction.

Certainly, in other embodiments, a first guiding structure (not shown in the figure) is provided on a path in which the first power water inlet portion, the first propulsion part, and the first power water outlet portion are provided. The flow direction of the liquid is changed by the first guiding structure to provide propulsion forces in various directions. Similarly, a second guiding structure (not shown in the figure) is provided on a path in which the first power water inlet portion, the second propulsion part, and the first power water outlet portion are provided. The flow direction of the liquid is changed by the second guiding structure to provide propulsion forces in various directions. Specific structures of the first guiding structure and the second guiding structure are not limited herein, provided that the first guiding structure and the second guiding structure can change the flow direction of the liquid.

In addition, one of the second propeller 132 on the left side and the second propeller 132 on the right side is adjusted to be opened, and the other of the second propeller 132 on the left side and the second propeller 132 on the right side is adjusted to be closed, so that the cleaning device 10 can rotate at a high speed in situ to increase a lifting force or a descending force. In this way, the cleaning device 10 can float up or submerge. A movement speed of the first propeller or the second propeller 132 may be determined as required. This is not limited herein. The second propellers 132 are provided, so that the cleaning device 10 can be switched between positions in the horizontal direction. For example, the cleaning device 10 moves straight or makes a turn in the horizontal direction to expand functions of the cleaning device 10, so that the cleaning device 10 is applicable to more usage scenarios.

In some embodiments, the moving assembly 110 includes two first moving wheels 1121. The two first moving wheels 1121 are provided at front portions of the two sides of the cleaning device body 101. An outer side surface of the first moving wheel 1121 is provided with a drive paddle 11211. The drive paddle 11211 is detachably or fixedly connected to the outer side surface of the first moving wheel 1121. When the cleaning device 10 moves on the water surface 30, the drive paddle 11211 is at least partially located under the water surface 30, rotates with the first moving wheel 1121, and is configured to adjust the second driving force applied to the cleaning device 10 in the horizontal direction. When the cleaning device 10 is in the third motion state, the cleaning device 10 moves on the water surface 30, and the drive paddle 11211 is at least partially exposed above the water surface 30 and at least partially located under the water surface 30. The first moving wheel 1121 rotates to drive the drive paddle 11211 to rotate. A part, of the drive paddle 11211, located under the water surface 30 generates a certain action force with the liquid to generate the second driving force for the cleaning device 10 to move in the third motion state, so that the cleaning device 10 moves forward in the horizontal direction. When the cleaning device 10 moves on the target bottom wall 401, the drive paddle 11211 completely submerges, and a forward action force applied to the cleaning device 10 in the horizontal direction and a backward action force applied to the cleaning device 10 in the horizontal direction cancel each other out, so that movement of the cleaning device 10 on the target bottom wall 401 is not affected.

The drive paddle 11211 is provided on the first moving wheel 1121 to provide the second driving force in the horizontal direction for the cleaning device 10 to push the cleaning device 10 to move forward and backward in the horizontal direction. Because an action of the drive paddle 11211 is the same as that of the second propeller 132, to some extent, the drive paddle 11211 may replace the second propeller 132. This reduces a quantity of components, costs, and a weight of the cleaning device.

Specifically, the drive paddle 11211 may be an elastic drive paddle. When the cleaning device 10 is in the third motion state, the elastic drive paddle rotates with the first moving wheel 1121 to strike water. Because the elastic drive paddle is not easily deformed, the cleaning device 10 efficiently paddles the water and therefore moves forward and backward in the horizontal direction. The elastic drive paddle may be made of a flexible material. There may be a plurality of drive paddles 11211. The plurality of drive paddles 11211 are provided in a radial direction of the first moving wheel 1121. There may be, but is not limited to, three, four, five, six, or more drive paddles 11211. An outer side wall of the first moving wheel 1121 may be directly provided with the drive paddle 11211. For example, the drive paddle 11211 is detachably or integrally molded on the outer side wall of the first moving wheel 1121. Alternatively, the outer side wall of the first moving wheel 1121 is indirectly provided with the drive paddle 11211. In other words, the drive paddle 11211 is detachably or integrally molded on a drive housing, and then the drive housing is detachably connected to the first moving wheel 1121, so that the drive paddle 11211 is conveniently mounted and replaced. This improves user experience. For example, in this embodiment, the drive paddle 11211 is integrally molded on an outer side wall of the drive housing, and then the drive housing is detachably connected to the first moving wheel 1121.

Refer to FIG. 17. FIG. 17 is a side diagram of a cleaning device according to an embodiment of the present disclosure. With reference to FIG. 1 to FIG. 16, further, the drive paddle 11211 at least partially protrudes from an outer contour of the cleaning device body 101 in a lateral direction of the cleaning device 10. In other words, the drive paddle 11211 partially or entirely protrudes from the outer contour of the cleaning device body 101. When the cleaning device 10 moves along an edge or at a corner, the drive paddle 11211 may be further used as a side brush on a side portion and can scrape against the wall and the corner of the pool to scrape off garbage attached to the wall and the corner of the pool. This further improves the cleaning efficiency. Certainly, the drive paddle 11211 may alternatively not protrude from the contour of the cleaning device body 101 and only provide a driving force for the cleaning device to move on the water surface.

In some embodiments, the moving assembly 110 includes two second moving wheels 1122. The two second moving wheels 1122 are provided at a rear end of the bottom of the cleaning device body 101. The first moving wheels 1121 and the second moving wheels 1122 can drive the cleaning device 10 to move in the horizontal direction and the vertical direction. The first moving wheels 1121 and the second moving wheels 1122 can operate to drive the cleaning device 10 to move on the target bottom wall 401 and the target side wall 402 and move from the target bottom wall 401 to the target side wall 402. An outer side surface of the second moving wheel 1122 may also be provided with the drive paddle 11211. The second moving wheel 1122 may be directly or indirectly provided with the drive paddle 11211. A specific disposition form of the drive paddle 11211 may be the same as the above. Details are not described herein again.

The moving assembly 110 may only include the first moving wheel 1121 and the second moving wheel 1122 and not include the track 111. The cleaning device 10 moves with the first moving wheel 1121 and the second moving wheel 1122. In other embodiments, the moving assembly 110 may alternatively include the track 111. The track 111 may be selected based on an actual requirement. When the moving assembly 110 includes the first moving wheel 1121, the second moving wheel 1122, and the track, the first moving wheel 1121 and the second moving wheel 1122 are connected through the track 111. In other words, the first moving wheel 1121 and the second moving wheel 1122 rotate with the track 111. The track 111 can operate to drive the cleaning device 10 to move. The track 111 can drive the cleaning device 10 to move in the horizontal direction. As shown in FIG. 5, when the cleaning device 10 is located on the target bottom wall 401 of the target region 40, the track 111 can operate to drive the cleaning device 10 to move on the target bottom wall 401. The track 111 can further drive the cleaning device 10 to move in the vertical direction. As shown in FIG. 6, when the cleaning device 10 is tightly attached to the target side wall 402 of the target region 40, the track 111 can operate to drive the cleaning device 10 to move on the target side wall 402.

In some embodiments, the track 111 enables the cleaning device 10 to move from the target bottom wall 401 to the target side wall 402. As shown in FIG. 8, when the track 111 moves to a joint between the target bottom wall 401 and the target side wall 402, one part of the track 111 moves on the target side wall 402, and another part of the track 111 moves on the target bottom wall 401. The part of the track 111 on the target side wall 402 can drive the cleaning device 10 to move upward until the cleaning device moves from the target bottom wall 401 to the target side wall 402. After the cleaning device 10 moves from the target bottom wall 401 to the target side wall 402, the cleaning device 10 may be driven by the track 111 to move on the target side wall 402. The cleaning device 10 can move on the target side wall 402 under the second driving force provided by the second propeller 132. The cleaning device 10 can move on the target side wall 402 under a third driving force provided by the main water pump 210. For details about the main water pump 210 and the third driving force, refer to the following description. The track 111 is provided, so that the cleaning device 10 can move at various positions in the liquid, and the cleaning device 10 can move from the target bottom wall 401 to the target side wall 402.

In some embodiments, the cleaning device 10 includes the drive mechanism. The drive mechanism is provided on the cleaning device body 101. The drive mechanism is configured to generate a suction force to form a water flow channel with the liquid inlet portion 1011, the filtering box 711, and the liquid outlet portion 1012. The liquid inlet portion 1011 may be configured as an inlet for liquid to enter the cleaning device 10. The liquid outlet portion 1012 may be configured as an outlet for liquid to leave the cleaning device 10 and then enter the target region 40. The drive mechanism includes a main water pump 210. The main water pump 210 may be configured to drive liquid to be sucked in the cleaning device 10 through the liquid inlet portion 1011 and drive liquid to be discharged from the cleaning device 10 through the liquid outlet portion 1012. The main water pump 210 includes a main water pump impeller and a main water pump motor. The main water pump impeller may be driven by the main water pump motor to rotate, so that liquid in the target region 40 is sucked in through the liquid inlet portion 1011, and liquid in the cleaning device 10 is discharged into the target region 40 through the liquid outlet portion 1012. The cleaning device 10 may adjust a rotation direction of the main water pump impeller of the main water pump 210 to exchange functions of the liquid inlet portion 1011 and the liquid outlet portion 1012. For example, when the main water pump impeller of the main water pump 210 rotates reversely, the liquid inlet portion 1011 may be configured to allow liquid to be discharged, and the liquid outlet portion 1012 may be configured to allow liquid to be sucked in.

In some embodiments, when the cleaning device 10 is located on the target side wall 402, the liquid outlet portion 1012 may at least face the interior of the target region 40 and be parallel to the horizontal direction or tilt downward in the vertical direction to ensure that, when the main water pump 210 operates, and the liquid is discharged through the liquid outlet portion 1012, the third driving force can be applied to the cleaning device 10 to drive the cleaning device 10 to be tightly attached to the target side wall 402. The third driving force may be a reaction force applied to the cleaning device 10 when the main water pump 210 drives the liquid to be discharged through the liquid outlet portion 1012. When the liquid outlet portion 1012 faces the interior of the target region 40 and is parallel to the horizontal direction, the third driving force applied to the cleaning device 10 is perpendicular to the target side wall 402, so that the cleaning device 10 can be tightly attached to the target side wall 402.

In some embodiments, when the cleaning device 10 needs to move on the target side wall 402, the liquid outlet portion 1012 may face the interior of the target region 40. When the liquid outlet portion 1012 tilts downward in the vertical direction, the third driving force applied to the cleaning device 10 has a horizontal component force facing the target side wall 402, so that the cleaning device 10 can be tightly attached to the target side wall 402. In addition, the third driving force further has an upward component force in the vertical direction, so that the cleaning device 10 can move upward along the target side wall 402. When the cleaning device 10 is located on the target bottom wall 401, the third driving force obtained by discharging liquid through the liquid outlet portion 1012 by using the main water pump 210 further has a component force in the horizontal direction, so that the cleaning device 10 can move on the target bottom wall 401.

In some embodiments, the liquid inlet portion 1011 is provided at a front position on a lower portion of the body of the cleaning device 10. When the cleaning device 10 needs to move on the target side wall 402, the main water pump 210 may suck the liquid through the liquid inlet portion 1011 to obtain a fourth driving force to drive the cleaning device 10 to be tightly attached to the target side wall 402. The fourth driving force may be a suction force generated by sucking the liquid in the main water pump 210 through the liquid inlet portion 1011. The cleaning device 10 is tightly attached to the target side wall 402 under the suction force.

In some embodiments, when the cleaning device 10 needs to move on the target side wall 402, the main water pump 210 of the cleaning device 10 may drive the cleaning device 10 to be tightly attached to the target side wall 402. At least one of the track 111, the second propeller 132, or the main water pump 210 of the cleaning device 10 may provide an upward driving force in the vertical direction to drive the cleaning device 10 to move upward on the target side wall 402. At least one of the track 111 or the second propeller 132 of the cleaning device 10 may provide a downward driving force in the vertical direction to drive the cleaning device 10 to move downward on the target side wall 402. The main water pump 210 is provided, so that the cleaning device 10 can be tightly attached to the target side wall 402 to limit a position of the cleaning device 10. In this way, the cleaning device 10 can conveniently move on the target side wall 402, and the cleaning device 10 can be switched from the position under the water surface 30 to the position on the water surface 30.

In some embodiments, the cleaning device 10 includes the liquid inlet portion 1011 and the liquid outlet portion 1012. The liquid inlet portion 1011 and the liquid outlet portion 1012 are rotatably provided on the cleaning device 10, so that liquid at each of the liquid inlet portion 1011 and the liquid outlet portion 1012 rotatably flows to change a flow direction of the liquid in real time. In this way, the cleaning device 10 can obtain propulsion forces in various directions.

The first power adjustment assembly, the second power adjustment assembly, the mode switching member 510, the movement propulsion mechanism, the drive mechanism, and the filtering mechanism 700 of the cleaning device cooperate with each other. Therefore, the mode switching member 510, the first buoyancy module, the gravity module, the second buoyancy module, the first functional sub-module, the second functional sub-module, the lift propulsion assembly, and the umbrella assembly of the cleaning device, the first propeller of the movement propulsion mechanism, the liquid inlet portion 1011, and the liquid outlet portion 1012 all can provide the first driving force in the vertical direction, so that the cleaning device 10 can float up and submerge. The track 111, the drive paddle 11211, and the second propeller 132 of the movement propulsion mechanism, the liquid inlet portion 1011, and the liquid outlet portion 1012 all can provide the second driving force in the horizontal direction, so that the cleaning device 10 can move forward and backward in the horizontal direction. The flow direction of the liquid is changed by the first propulsion part and the second propulsion part to provide driving forces in directions other than the vertical direction and the horizontal direction, so that the cleaning device 10 can move in various directions in water.

The mode switching member 510, the lift propulsion assembly, and the umbrella assembly of the cleaning device 10, and the main water pump 210 of the drive mechanism provide propulsion forces, so that the cleaning device 10 can suspend when forces applied to the cleaning device 10 are balanced. When the cleaning device 10 cannot suspend under the propulsion forces alone, a volume of the buoyancy cavity 5111 may be changed to compensate for the first driving force for the cleaning device 10 to float up and submerge.

The cleaning device 10 may adjust power of the propeller motor of the second propeller 132 on each of the left side and the right side to adjust a speed at which the liquid is pushed by the second propeller 132 on each of the left side and the right side to move in the second preset direction, so that the cleaning device 10 can make a turn. The drive paddle 11211 is provided, so that the cleaning device 10 can move in the horizontal direction, and the cleaning device 10 can also make a turn.

When the cleaning device 10 performs water surface cleaning, the cleaning device 10 may first move to a waterline at the target side wall 402. When the device air inlet of the cleaning device 10 is exposed above the water surface 30, the buoyancy adjustment part 5112 begins to operate, enabling the external gas to be sucked in the buoyancy cavity 5111 and the liquid inside the buoyancy cavity 5111 to be discharged through the buoyancy cavity liquid inlet 5114, so that the cleaning device 10 is adjusted to be in the water surface cleaning posture. The cleaning device 10 moves along an edge to the right or to the left. The cleaning device 10 first moves along an edge by one round to construct a map of the water surface and then performs cleaning along a bow-shaped path (the bow-shaped path means that two adjacent paths are parallel to each other, and the cleaning device moves along the two adjacent paths in two opposite forward directions) After water surface cleaning is completed, the cleaning device 10 may directly sink in the water surface cleaning posture or move downward along the target side wall 402 to the target bottom wall 401.

In some embodiments, as shown in FIG. 1 and FIG. 3, the liquid inlet portion 1011 may be provided on a bottom surface of the rear portion of the cleaning device body 101. The buoyancy cavity 5111 is provided at an upper portion of the rear portion of the cleaning device body 101, and the cleaning device 10 moves in the first direction when cleaning the bottom wall of the pool. When the cleaning device 10 is switched to water surface cleaning, the rear portion of the cleaning device 10 is exposed at the water surface 30, the front portion of the cleaning device 10 submerges under the water surface 30, and the cleaning device 10 substantially moves backward on the water surface 30 (compared with bottom wall cleaning). The first direction is a direction from the rear portion to the front portion of the cleaning device 10.

In some embodiments, the buoyancy cavity 5111 and the filtering box 711 may be arranged in parallel. In other words, the buoyancy cavity 5111 is located in front of the filtering box 711. When the cleaning device 10 performs water surface cleaning, at least a part of the buoyancy cavity 5111 and at least a part of the liquid inlet portion 1011 are located above the water surface 30. In this case, the filtering box 711 can be removed in a simpler manner. The filtering box cover 720 at the top of the cleaning device body 101 only needs to be opened, so that the filtering box 711 can be removed. In this disposition manner, when performing water surface cleaning, the cleaning device 10 may have a larger tilt angle than that in the foregoing disposition manner. The buoyancy cavity liquid inlet 5114 and the buoyancy cavity air inlet 5113 of the buoyancy cavity 5111 may still be provided in a manner in which the buoyancy cavity air inlet 5113 is provided at a substantially highest position on the buoyancy cavity 5111, and the buoyancy cavity liquid inlet 5114 is provided at a substantially lowest position on the buoyancy cavity 5111.

In some embodiments, a charging base may be provided on a poolside, so that the cleaning device 10 can be conveniently charged. Based on the above disposition of the buoyancy cavity 5111 and the buoyancy cavity liquid inlet 5114 of the cleaning device 10, a tilt angle of the charging base may be set to be consistent with the tilt angle of the cleaning device 10 existing when the cleaning device 10 performs water surface cleaning in the third motion state. When the cleaning device 10 is placed on the charging base, the buoyancy cavity liquid inlet 5114 of the cleaning device 10 is located at the lowest position on the buoyancy cavity 5111, so that when the cleaning device 10 is on the charging base, residual liquid in the buoyancy cavity 5111 can still be discharged automatically or driven by the buoyancy cavity pump.

It should be noted that the above description of the cleaning device 10 and various members thereof is merely for ease of description and does not limit the present disclosure to the scope of the cited embodiments. It may be understood that a person skilled in the art, with understanding of the principle of the apparatus, may make any combination of various components or form a sub-component to be connected to other components without departing from the principle.

In some embodiments, the cleaning device 10 includes a control member. The control member may be configured to control the cleaning device 10 to perform water surface cleaning or underwater cleaning for the swimming pool. The control member may obtain a target task of cleaning the target region, where the target task includes water surface cleaning and underwater cleaning; determine an adjustment parameter of the cleaning device 10 based on the target task and a current position of the cleaning device 10; and control, based on the adjustment parameter, the cleaning device 10 to move to a target position to complete the target task. For details about the above embodiment, refer to the following description.

Refer to FIG. 18. FIG. 18 is a schematic flow chart of a liquid cleaning control method according to an embodiment of the present disclosure. With reference to FIG. 1 to FIG. 17, the present disclosure provides a liquid cleaning control method. The liquid cleaning control method may be applied to the cleaning device 10 and performed by the control member. As shown in FIG. 18, the liquid cleaning control method may include the following steps. Step S1010: Obtain a target task of cleaning a target region.

The target region 40 may be a to-be-cleaned swimming pool. The target task may be a task of cleaning the target region 40. The target task may include water surface cleaning and/or underwater cleaning. The water surface cleaning may mean cleaning a water surface 30 of the target region 40. Underwater cleaning may mean cleaning an underwater part of the target region 40 (such as water in the target region 40 and a wall of the target region 40). In some embodiments, the target task may further include cleaning a specific to-be-cleaned part. For example, underwater cleaning may further include, but is not limited to, cleaning the water, cleaning the bottom of the pool, cleaning each wall of the pool, and the like.

The control member may obtain the target task in various manners. For example, the control member may obtain the target task input by a user. For another example, the control member may be configured to perform the target task periodically, such as performing water surface cleaning once every three days and performing underwater cleaning once every two days. For another example, the cleaning device 10 may include a detection member. The detection member may detect water quality of the target region 40 to obtain water quality data of the target region 40. The control member may obtain the water quality data and determine the target task based on the water quality data. The water quality data may be data reflecting a water quality condition of the target region 40. The water quality data includes, but is not limited to, a picture of the water surface of the target region 40, a picture of the water in the target region 40, and a picture of each pool wall. The control member may input the water quality data into a task determining model, and an output of the task determining model may include the target task. The task determining model may analyze the water quality data of the target region 40 to determine cleanliness (such as clarity, algae distribution, and debris) of various regions (such as the water surface, water in the target region 40, and each pool wall) to determine a corresponding target task. The task determining model may be a convolutional neural network model, a graph neural network model, or any machine learning model that implements the above functions. The task determining model may be obtained by performing training based on a plurality of groups of training samples with labels. The training samples may include sample water quality data of a sample swimming pool. The labels may include a sample task. The sample task may be obtained by manually labeling the sample water quality data.

Step S1020: Determine an adjustment parameter of the cleaning device based on the target task and a current position of the cleaning device.

The control member may obtain the current position of the cleaning device 10. For more details about obtaining the current position of the cleaning device 10, refer to the above description of the first sensor. The adjustment parameter may include information of a route from the current position to a position, in the target region 40, at which the target task needs to be performed and route information required to complete the target task. The control member may determine, based on the target task, a starting position, in the target region 40, at which the target task needs to be performed; determine, based on the starting position and the current position, the information of the route of the cleaning device 10 from the current position to the position, in the target region 40, at which the target task needs to be performed; and determine, based on the target task for the target region 40, the route information required to complete the target task, to determine the adjustment parameter of the cleaning device 10.

Step S1030: Control, based on the adjustment parameter, the cleaning device to move and perform cleaning to complete the target task.

The control member may control, based on the information of the route from the current position to the position, in the target region 40, at which the target task needs to be performed in the adjustment parameter, the cleaning device 10 to move from the current position to the starting position at which the target task needs to be performed, and turn on, based on the route information required to complete the target task in the adjustment parameter, a cleaning mechanism 400 and a filtering mechanism 700 of the cleaning device 10 to perform cleaning to complete the target task. After completing the target task, the cleaning device 10 may stay at an end position, return to the starting position before moving, or move to a preset default position.

According to the liquid cleaning control method, the cleaning device 10 can be controlled to clean all parts of the target region 40. This improves target region cleaning efficiency and ensures comprehensive cleaning of the target region 40.

In some embodiments, the present disclosure provides a computer-readable storage medium. The storage medium may store computer instructions. When executed by a processor, the computer instructions implement the liquid cleaning control method in this specification.

The above description describes only implementations of the present disclosure and is not intended to limit the scope of the present disclosure. Any equivalent structure or equivalent process transformation performed based on the contents of the specification and the accompanying drawings of the present disclosure or applied directly or indirectly in other related technical fields shall fall within the protection scope of the present disclosure.

## Claims

1. A cleaning device for operating in liquid, comprising a cleaning device body;
a cleaning cavity provided at a front portion of the cleaning device body and configured to accommodate at least one first cleaning part;
a liquid inlet portion, wherein the liquid inlet portion is at least partially laterally disposed in the cleaning cavity in a length direction of the liquid inlet portion and at least partially disposed in the cleaning cavity in a width direction of the liquid inlet portion, and the liquid inlet portion is configured to allow external fluid to enter the cleaning device body;
a filtering mechanism at least partially disposed in the front portion of the cleaning device body, wherein the filtering mechanism comprises a filtering box and a filtering box inlet, and the liquid inlet portion is adjacent to and communicates with the filtering box inlet; and
a mode switching member disposed at the front portion of the cleaning device body and at least partially located above the filtering mechanism, wherein the mode switching member is configured to adjust a posture of the cleaning device to implement switching of the cleaning device between a first motion state and a third motion state, wherein
the first motion state comprises a state of performing underwater cleaning, wherein when the cleaning device performs underwater cleaning, the liquid inlet portion is close to a to-be-cleaned surface; and the third motion state comprises a state of performing water surface cleaning, wherein when the cleaning device performs water surface cleaning, the liquid inlet portion is at least partially located above the water surface.

2. The cleaning device according to claim 1, wherein the mode switching member comprises a buoyancy adjustment assembly configured to adjust a magnitude of a buoyancy force applied to the cleaning device in a vertical direction.

3. The cleaning device according to claim 2, wherein the buoyancy adjustment assembly comprises a buoyancy cavity and a buoyancy adjustment part, wherein the buoyancy cavity is configured to accommodate liquid and/or gas, the buoyancy cavity is at least partially disposed above the filtering mechanism, and the buoyancy adjustment part communicates with the buoyancy cavity to adjust a volume of the liquid or the gas in the buoyancy cavity.

4. The cleaning device according to claim 3, wherein the third motion state comprises a state in which the buoyancy cavity at the front portion of the cleaning device is at least partially located above the water surface, the liquid inlet portion is at least partially located above the water surface, and an area of a maximum cross section of the buoyancy cavity is substantially flush with the water surface.

5. The cleaning device according to claim 3 or 4, wherein the buoyancy cavity is provided with a buoyancy cavity air inlet and a buoyancy cavity liquid inlet, wherein when the cleaning device is in at least one of the first motion state or the third motion state, the buoyancy cavity air inlet is located at a substantially highest position on the buoyancy cavity, enabling the gas in the buoyancy cavity to be completely discharged through the buoyancy cavity air inlet, and the buoyancy cavity liquid inlet is located at a substantially lowest position on the buoyancy cavity, enabling the liquid in the buoyancy cavity to be completely discharged through the buoyancy cavity liquid inlet.

6. The cleaning device according to claim 5, wherein the cleaning device body is provided with a device air inlet and a device liquid inlet, wherein the buoyancy cavity air inlet communicates with the device air inlet through a first connection duct, the buoyancy cavity liquid inlet communicates with the device liquid inlet through a second connection duct, the device air inlet is located at the front portion of the cleaning device, enabling the device air inlet to communicate with external gas as soon as possible when the cleaning device is exposed at the water surface, and when the cleaning device is at least in the third motion state, the device liquid inlet is located under the water surface.

7. The cleaning device according to claim 5, wherein the filtering mechanism comprises a filtering box cover detachably or pivotally connected to the cleaning device body, wherein at least a part of the buoyancy cavity is located between the filtering box cover and the filtering box.

8. The cleaning device according to claim 7, wherein the filtering box is removed in one of the following manners: removing the filtering box after the filtering box cover and the buoyancy cavity are synchronously opened; removing the filtering box after the buoyancy cavity and the filtering box cover are opened separately; and removing the filtering box while the filtering box cover and the buoyancy cavity are opened.

9. The cleaning device according to claim 8, wherein the buoyancy adjustment part is disposed on the cleaning device body, and when the buoyancy adjustment part is connected to the buoyancy cavity, the buoyancy cavity is docked with the cleaning device body through a docking part.

10. The cleaning device according to any one of claims 3 to 9, wherein there are at least two buoyancy cavities substantially symmetrically provided in a longitudinal direction of the cleaning device, and the cleaning device further operates in a second motion state, wherein the second motion state comprises a state of cleaning a waterline, wherein when the cleaning device cleans the waterline, a buoyancy force of a buoyancy cavity on one side of the longitudinal direction of the cleaning device is controlled to be greater than a buoyancy force of a buoyancy cavity on the other side, enabling the longitudinal direction of the cleaning device to be substantially parallel to the waterline.

11. The cleaning device according to any one of claims 3 to 9, wherein there are at least two buoyancy cavities substantially symmetrically disposed in a longitudinal direction of the cleaning device, wherein the buoyancy cavity air inlet and the buoyancy cavity liquid inlet are disposed on each buoyancy cavity, and volumes of gas or liquid in the at least two buoyancy cavities are synchronously adjusted by at least one buoyancy adjustment part.

12. The cleaning device according to any one of claims 1 to 11, further comprising a moving assembly, wherein the moving assembly comprises two first moving wheels provided at front portions of two sides of the cleaning device body, wherein an outer side surface of the first moving wheel is provided with a drive paddle, wherein when the cleaning device is in the third motion state, the drive paddle is at least partially located under the water surface and rotates with the first moving wheel to generate a driving force for the cleaning device to move in the third motion state.

13. The cleaning device according to claim 12, wherein the drive paddle at least partially protrudes from an outer contour of the cleaning device body in a lateral direction of the cleaning device.

14. The cleaning device according to any one of claims 1 to 13, wherein the at least one first cleaning part comprises blades radially extending outward along a roller brush shaft, wherein when the cleaning device performs water surface cleaning, some blades of the at least one first cleaning part are at least partially located under the water surface.

15. The cleaning device according to claim 14, further comprising the moving assembly, wherein the moving assembly comprises the two first moving wheels disposed at the front portions of the two sides of the cleaning device body, and the at least one first cleaning part comprises two first roller brushes disposed in parallel in the cleaning cavity, wherein one first moving wheel is in transmission connection to one first roller brush, the other first moving wheel is in transmission connection to the other first roller brush, and the two first moving wheels are driven by a same moving motor or separate moving motors.

16. The cleaning device according to claim 14, further comprising the moving assembly, wherein the moving assembly comprises the two first moving wheels disposed at the front portions of the two sides of the cleaning device body, and the at least one first cleaning part comprises one first roller brush, wherein the first roller brush is in transmission connection to one of the first moving wheels, and the two first moving wheels are driven by a same moving motor or separate moving motors, or the first roller brush is driven by a separate roller brush motor.

17. The cleaning device according to claim 15 or 16, wherein a first scraping blade is provided at a bottom of the cleaning device body, wherein the first scraping blade extends in the lateral direction of the cleaning device body, and when the cleaning device cleans the to-be-cleaned surface, a negative pressure zone is formed through enclosure of the first scraping blade, the two first moving wheels, and the at least one first cleaning part.

18. The cleaning device according to any one of claims 1 to 17, wherein the cleaning device body comprises a second device housing, wherein a filtering box cavity is formed in the second device housing, and the filtering mechanism is mounted in the filtering box cavity, wherein a side of the second device housing is provided with a liquid inlet channel, wherein the side of the second device housing is close to the liquid inlet portion, and the liquid inlet channel comprises a first port away from the filtering box inlet and a second port close to the filtering box inlet, wherein a size of the first port is greater than that of the second port.

19. The cleaning device according to any one of claims 1 to 18, comprising a propulsion assembly, wherein the propulsion assembly comprises at least two second propellers disposed on the two sides of the cleaning device, wherein when the cleaning device performs water surface cleaning, the second propeller is at least partially located under the water surface, and an extension direction of the second propeller is substantially parallel to the water surface.

20. The cleaning device according to any one of claims 1 to 19, wherein the cleaning device body comprises a liquid outlet portion, and the cleaning device comprises a drive mechanism, wherein the drive mechanism is disposed at a rear portion of the cleaning device body and configured to generate a suction force to form a water flow channel that sequentially passes through the liquid inlet portion, the filtering box inlet, the filtering box, the filtering box outlet, and the liquid outlet portion.
